(19) Europäisches Patentamt
European Patent Office
Office européen des brevets

(11) **EP 2 613 524 A1**

(12) **EUROPEAN PATENT APPLICATION**
published in accordance with Art. 153(4) EPC

(43) Date of publication:
**10.07.2013 Bulletin 2013/28**

(51) Int Cl.:
***H04N 7/173*** (2011.01)

(21) Application number: **11821581.3**

(22) Date of filing: **22.08.2011**

(86) International application number:
**PCT/JP2011/068833**

(87) International publication number:
**WO 2012/029564 (08.03.2012 Gazette 2012/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2011 US 201113081566
30.08.2010 US 378256 P**

(71) Applicant: **Sony Corporation
Tokyo 108-0075 (JP)**

(72) Inventors:
• **KITAZATO Naohisa
Tokyo 108-0075 (JP)**
• **DEWA Yoshiharu
Tokyo 108-0075 (JP)**

(74) Representative: **Horner, David Richard et al
D Young & Co LLP
120 Holborn
London EC1N 2DY (GB)**

(54) **TRANSMISSION DEVICE, TRANSMISSION METHOD, RECEPTION DEVICE, RECEPTION METHOD, PROGRAM, AND BROADCAST SYSTEM**

(57) This invention relates to a transmission apparatus, a transmission method, a reception apparatus, a reception method, a program, and a broadcasting system capable of temporally dispersing accesses to a server from potentially numerous reception apparatuses.

A first operation scenario assumes cases in which the total number of the reception apparatuses remains virtually unchanged. In order to quickly settle accesses to a server 46, a validity probability parameter N = P1 in the item of trigger validity of trigger information to be transmitted for the first time is set to P1 = Ne/At (a rounded-up integer). The validity probability parameter N = Pk in the item of trigger validity of trigger information to be transmitted for the k-th time (k is an integer of at least 2) is set to Pk = (Ne - (k - 1)At)/At = P1 - (k - 1). After Pk drops to equal to or below 1, Pk remains set for 1. This invention can be applied where the reception apparatus is controlled using a TV program broadcast signal.

FIG.19

PROGRAM A

ACTUAL AUDIENCE TERMINAL COUNT

ESTIMATED AUDIENCE TERMINAL COUNT Ne

ACTUAL ACCESS COUNT UNDER Policy A

ACTUAL ACCESS COUNT UNDER Policy B

ACCESS COUNT MAXIMUM TARGET VALUE At

ACCESS START POINT T0

ACCESS LIMIT Te

$Ntr=(Te-T0)/td$

Td

## Description

[Technical Field]

This invention relates to a transmission apparatus, a transmission method, a reception apparatus, a reception method, a program, and a broadcasting system. More particularly, this invention relates to a transmission apparatus, a transmission method, a reception apparatus, a reception method, a program, and a broadcasting system for allowing the digital TV broadcast sender side to control the receiver side in operation to access a predetermined server.

[Background Art]

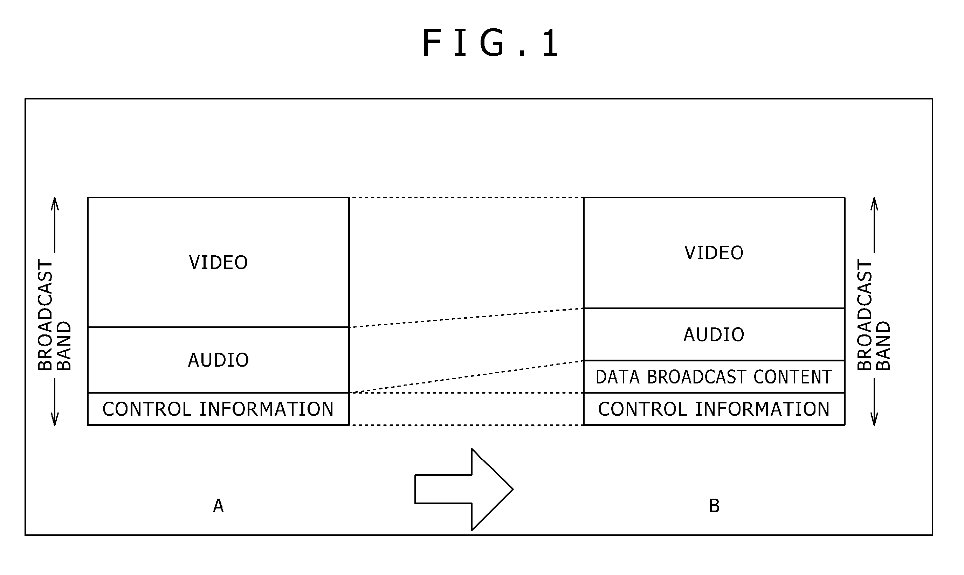

In recent years, the digitization of TV broadcasts has been promoted in Japan, and terrestrial digital broadcasting and BS digital broadcasting have gained wide-spread acceptance in the country. In digital TV broadcasting such as terrestrial digital broadcasting, not only program broadcasting but also so-called data broadcasting has been implemented. The content of the data broadcasting permits display of, say, information related to a currently broadcast TV program as well as information not related to the ongoing TV program (announcements of other TV programs, news, weather reports, traffic information, etc.) (e.g., see Patent Literature 1).
Incidentally, when TV broadcasting was digitized in Japan, a frequency band dedicated to data broadcasting was set aside beforehand within the broadcast band for digital TV broadcasting. Data broadcasting in Japan is implemented when data broadcast content is broadcast using that dedicated frequency band.
Meanwhile, for digital TV broadcasting in the United States, no frequency band dedicated to data broadcasting has been appropriated as opposed to digital TV broadcasting in Japan.
That is, as indicated by reference character A in Fig. 1, the existing broadcast band for digital TV broadcasting in the United States is occupied by a video band, an audio band, and a control information band; there is no band set aside for broadcasting data broadcast content. Thus if the band for broadcasting data broadcast content is to be appropriated within the limited broadcast band for digital TV broadcasting, it is necessary to narrow the video band and audio band, for example, as indicated by reference character B in Fig. 1.

[Citation List]

[Patent Literature]

[PTL 1]
Japanese Patent Laid-Open No. 2006-50237

[Summary]

[Technical Problem]

However, narrowing the video band and audio band to secure the band for broadcasting data broadcast content can result in degradation of the picture and sound quality of TV programs. Thus it is not a realistic approach.
Even if the band for data broadcast content is appropriated, the amount of data that can be transmitted on that band is limited. That can lead to information of data broadcast content becoming scarce in quantity. If the amount of the information is desired to be raised, it may take time to receive necessary data on the receiver side.
One conceivable way of supplying the receiver side with data broadcast content without using the broadcast band for digital TV broadcasting is by letting the broadcasting side control the receiver side to download the data broadcast content from a predetermined server via the Internet.
However, adopting the above method may entail such problems as congestion on the Internet due to temporally concentrated access to a predetermined server from the receiver side, or an inability to rapidly download the data broadcast content because of the server getting overloaded. Although this requires taking some measures against letting the predetermined server be accessed in a temporally concentrated manner by the receiver side, such measures have yet to be established at present.
This invention has been made in view of the above circumstances and provides arrangements for allowing the broadcasting side to control the receiver side in such a manner that access to a predetermined server from reception apparatuses is temporally dispersed.

[Solution to Problem]

According to a first aspect of this invention, there is provided a transmission apparatus for transmitting AV content, including: acquisition means for acquiring an estimated audience terminal count indicative of an estimated number of currently receiving reception apparatuses; computation means for computing, based on the estimated audience terminal count, a validity probability of trigger information about control of an application program to be executed by a reception apparatus in linkage with the AV content; generation means for generating the trigger information including the computed validity probability, and transmission means for transmitting the generated trigger information along with the AV content.

The generation means may generate the trigger information, including the computed validity probability, for controlling at least one of a process of acquiring the application program, a process of launching the application program, a process of firing an event on the currently executing application program, a process of suspending the currently executing application program, and a process of terminating the currently executing application program.

For the reception apparatus, the generation means may generate the trigger information, including the computed validity probability, for controlling the process of acquiring the application program entailing a process of accessing a predetermined server, or the process of firing an event on the currently executing application program.

The acquisition means may acquire the estimated audience terminal count based on past audience rating statistics.

The acquisition means may acquire the estimated audience terminal count based on actual measured values of the number of access to the server.

According to the first aspect of this invention, there is provided a transmission method for use with a transmission apparatus for transmitting AV content, the transmission method executed by the transmission apparatus and including the steps of: acquiring an estimated audience terminal count indicative of an estimated number of currently receiving reception apparatuses; computing, based on the estimated audience terminal count, a validity probability of trigger information about control of an application program to be executed by a reception apparatus in linkage with the AV content; generating the trigger information including the computed validity probability, and transmitting the generated trigger information along with the AV content.

According to the first aspect of this invention, there is provided a program for controlling a transmission apparatus for transmitting AV content, the program causing a computer of the transmission apparatus to execute a process including the steps of: acquiring an estimated audience terminal count indicative of an estimated number of currently receiving reception apparatuses; computing, based on the estimated audience terminal count, a validity probability of trigger information about control of an application program to be executed by a reception apparatus in linkage with the AV content; generating the trigger information including the computed validity probability; and transmitting the generated trigger information along with the AV content.

According to the first aspect of this invention, the estimated audience terminal count indicative of the estimated number of currently receiving reception apparatuses is first acquired; based on the estimated audience terminal count, the validity probability of the trigger information about control of the application program to be executed by the reception apparatus in linkage with the AV content is then computed; the trigger information including the computed validity probability is generated; and the generated trigger information is transmitted along with the AV content.

According to a second aspect of this invention, there is provided a reception apparatus for receiving transmitted AV content, the reception apparatus including: extraction means for extracting trigger information which is transmitted along with the AV content and which concerns control of an application program to be executed in linkage with the AV content; determination means for determining whether or not the trigger information is valid in accordance with a validity probability included in the extracted trigger information; and control means for controlling a process related to the application program in accordance with a command indicated by the extracted trigger information only if the trigger information is determined to be valid.

Only if the trigger information is determined to be valid, may the control means control a process of acquiring the application program, a process of launching the application program, a process of firing an event on the currently executing application program, a process of suspending the currently executing application program, or a process of terminating the currently executing application program, in accordance with the command indicated by the extracted trigger information.

Only if the trigger information is determined to be valid, may the control means control the process of acquiring the application program entailing a process of accessing a predetermined server, or the process of firing an event on the currently executing application program, in accordance with the command indicated by the extracted trigger information.

According to the second aspect of this invention, there is provided a reception method for use with a reception apparatus for receiving transmitted AV content, the reception method executed by the reception apparatus and including the steps of: extracting trigger information which is transmitted along with the AV content and which concerns control of an application program to be executed in linkage with the AV content; determining whether or not the trigger information is valid in accordance with a validity probability included in the extracted trigger information; and controlling a process related to the application program in accordance with a command indicated by the extracted trigger information only if the trigger information is determined to be valid.

According to the second aspect of this invention, there is provided a program for controlling a reception apparatus for receiving transmitted AV content, the program causing a computer of the reception apparatus to execute a process including the steps of: extracting trigger information which is transmitted along with the AV content and which concerns control of an application program to be executed in linkage with the AV content; determining whether or not the trigger information is valid in accordance with a validity probability included in the extracted trigger information; and controlling a process related to the application program in accordance with a command indicated by the extracted trigger information only if the trigger information is determined to be valid.

According to the second aspect of this invention, the trigger information which is transmitted along with the AV content and which concerns control of the application program to be executed in linkage with the AV content is first extracted; it is then determined whether or not the trigger information is valid in accordance with the validity probability included in the extracted trigger information; and the process related to the application program is controlled in accordance with the command indicated by the extracted trigger information only if the trigger information is determined to be valid.

According to a third aspect of this invention, there is provided a broadcasting system including: a transmission apparatus for transmitting AV content; and a reception apparatus for receiving the transmitted AV content. The transmission apparatus includes: acquisition means for acquiring an estimated audience terminal count indicative of an estimated number of currently receiving reception apparatuses; computation means for computing, based on the estimated audience terminal count, a validity probability of trigger information about control of an application program to be executed by the reception apparatus in linkage with the AV content; generation means for generating the trigger information including the computed validity probability; and transmission means for transmitting the generated trigger information along with the AV content. The reception apparatus includes: extraction means for extracting the trigger information transmitted along with the AV content; determination means for determining whether or not the trigger information is valid in accordance with the validity probability included in the extracted trigger information; and control means for controlling a process related to the application program in accordance with a command indicated by the extracted trigger information only if the trigger information is determined to be valid.

According to the third aspect of this invention, the transmission apparatus acquires the estimated audience terminal count indicative of the estimated number of currently receiving reception apparatuses; computes, based on the estimated audience terminal count, the validity probability of the trigger information about control of the application program to be executed by the reception apparatus in linkage with the AV content; generates the trigger information including the computed validity probability; and transmits the generated trigger information along with the AV content. The reception apparatus extracts the trigger information which is transmitted along with the AV content and which concerns control of the application program to be executed in linkage with the AV content; determines whether or not the trigger information is valid in accordance with the validity probability included in the extracted trigger information; and controls the process related to the application program in accordance with the command indicated by the extracted trigger information only if the trigger information is determined to be valid.

[Advantageous Effects of Invention]

According to the first aspect of this invention, a large number of reception apparatuses can be controlled to access a predetermined server in a temporally dispersed manner.

According to the second aspect of this invention, the process of accessing a predetermined server can be performed under control of the transmission apparatus.

According to the third aspect of this invention, accesses from reception apparatuses to a predetermined server can be temporally dispersed.

[Brief Description of Drawings]

[Fig. 1]
Fig. 1 is a schematic view showing a broadcast band of digital TV broadcasting.
[Fig. 2]

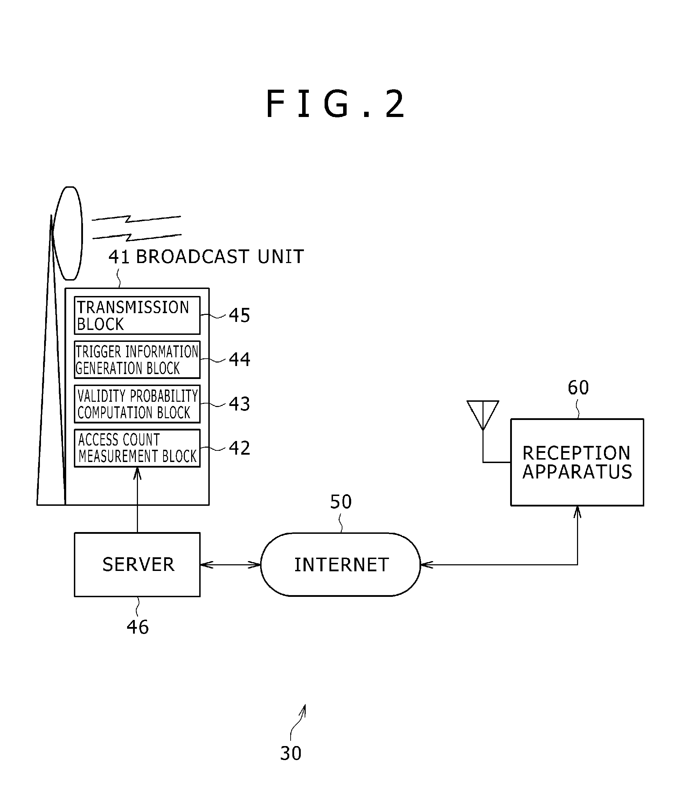

Fig. 2 is a schematic view showing a typical configuration of a broadcasting system to which this invention is applied.
[Fig. 3]

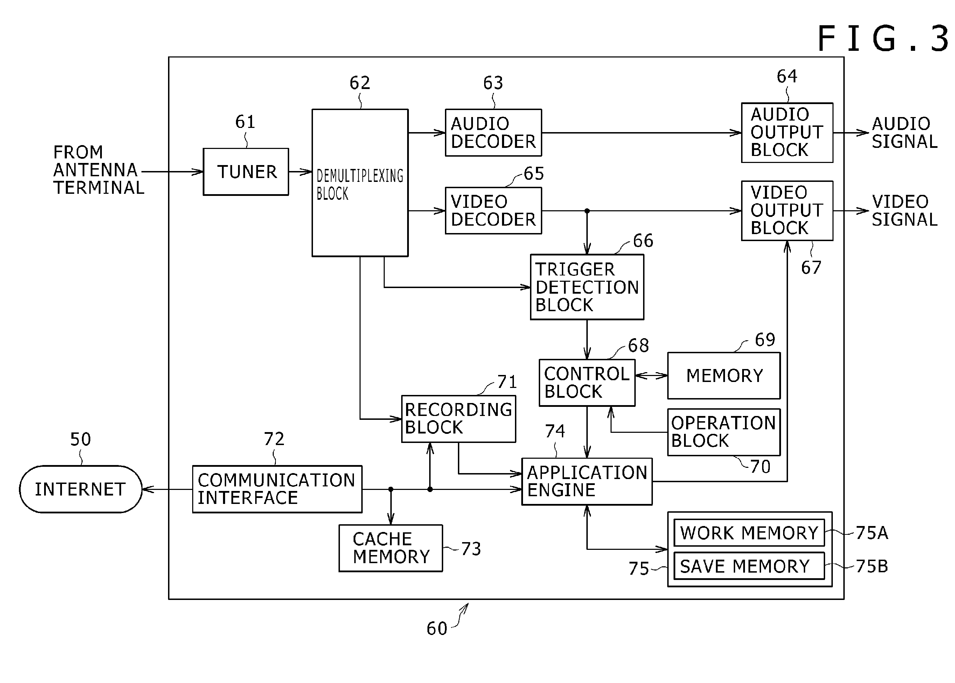

Fig. 3 is a block diagram showing a typical structure of a reception apparatus to which this invention is applied.

[Fig. 4]

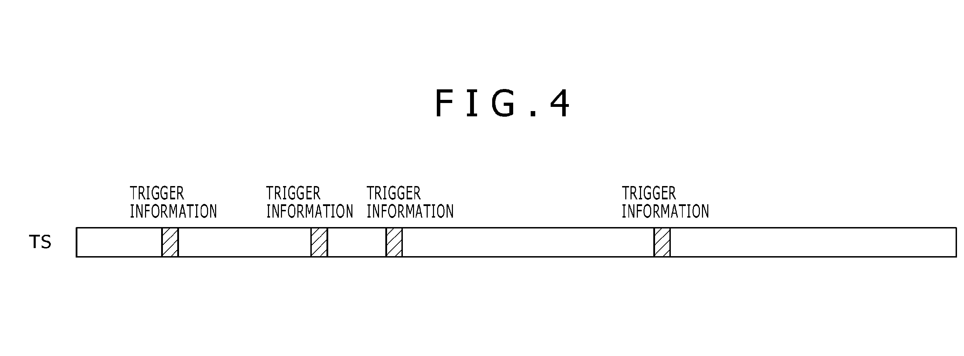

Fig. 4 is a schematic view illustrating a concept of having trigger information transmitted included in a PCR packet of a TS.
[Fig. 5]

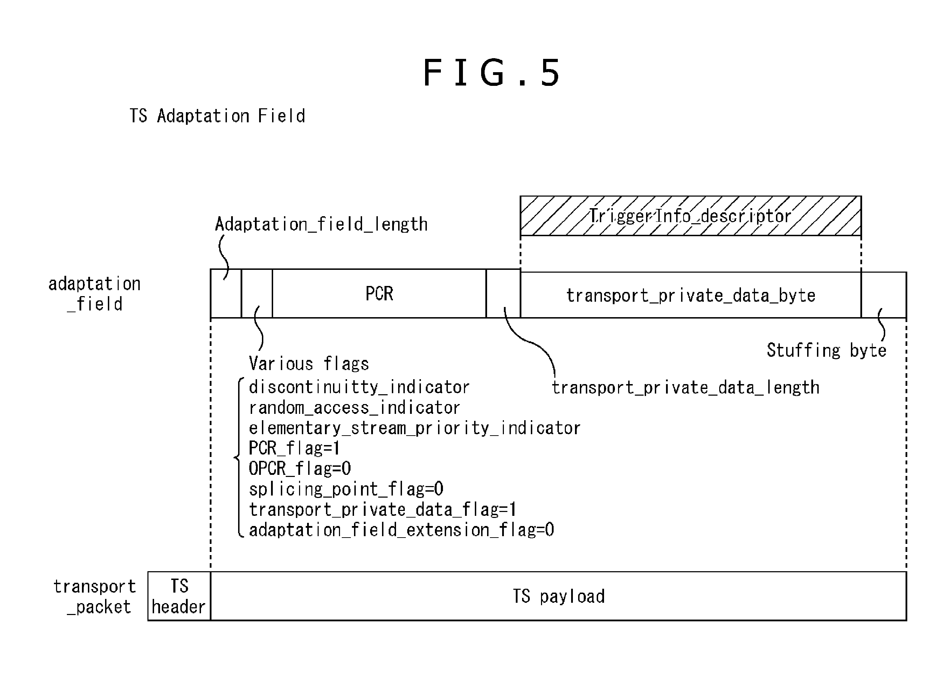

Fig. 5 is a schematic view showing where trigger information is specifically placed in the PCR packet.
[Fig. 6]

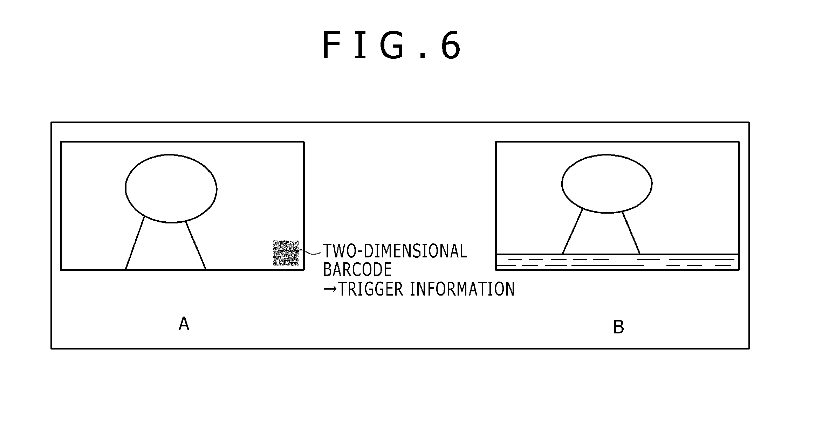

Fig. 6 is a schematic view showing an example of having trigger information embedded in a video signal.
[Fig. 7]

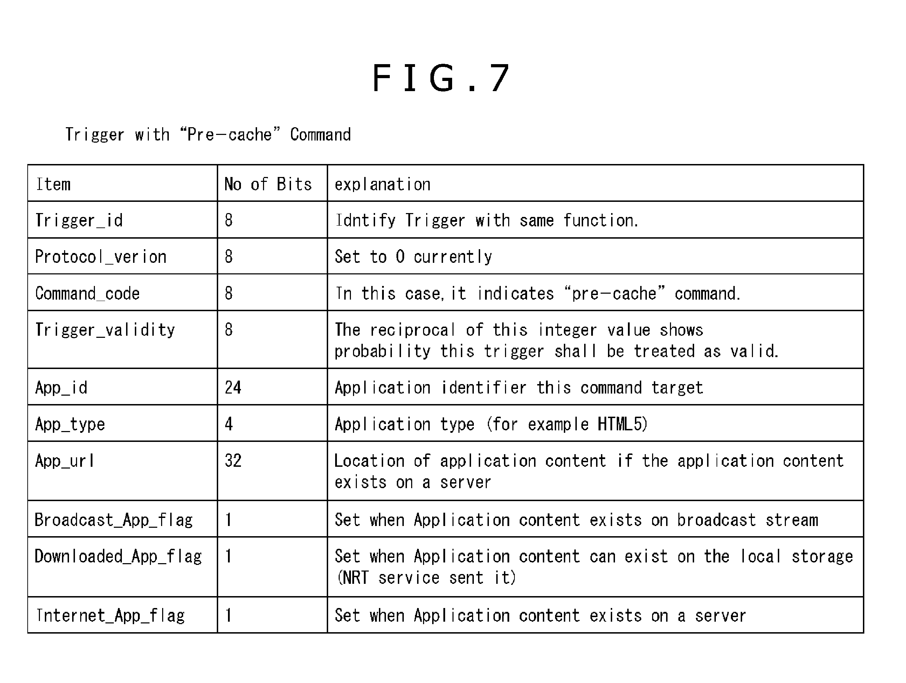

Fig. 7 is a tabular view listing items of trigger information indicating a Pre_cache command.
[Fig. 8]

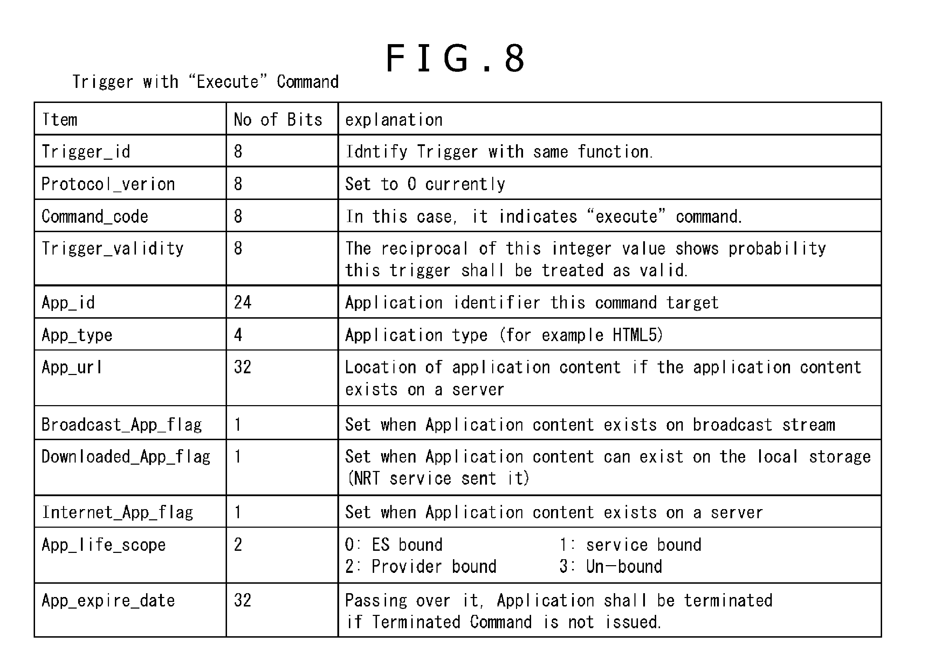

Fig. 8 is a tabular view listing items of trigger information indicating an Execute command.
[Fig. 9]

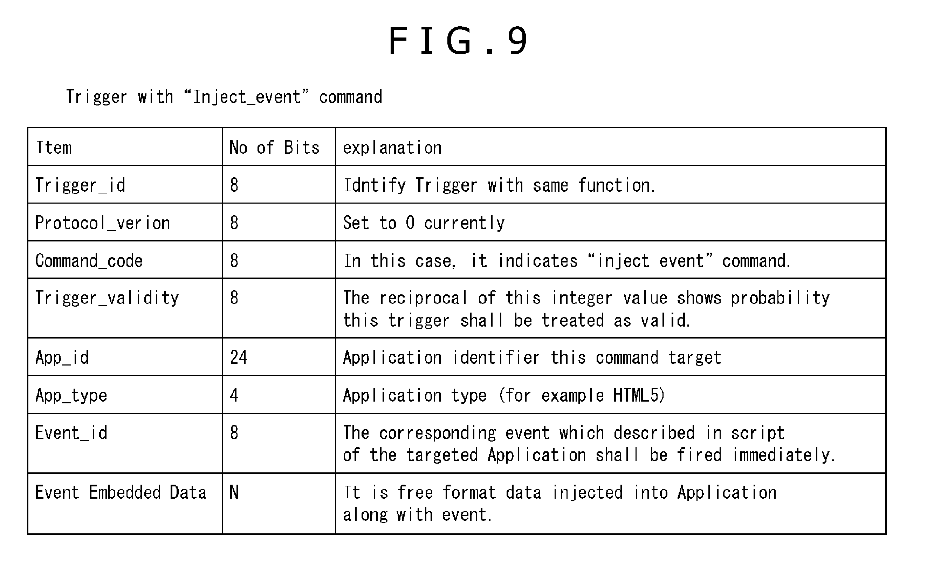

Fig. 9 is a tabular view listing items of trigger information indicating an Inject_event command.
[Fig. 10]

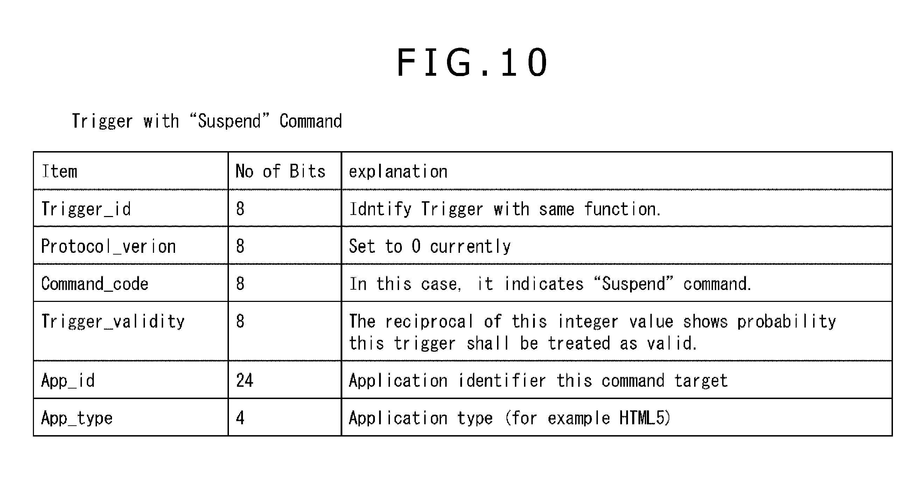

Fig. 10 is a tabular view listing items of trigger information indicating a Suspend command.
[Fig. 11]

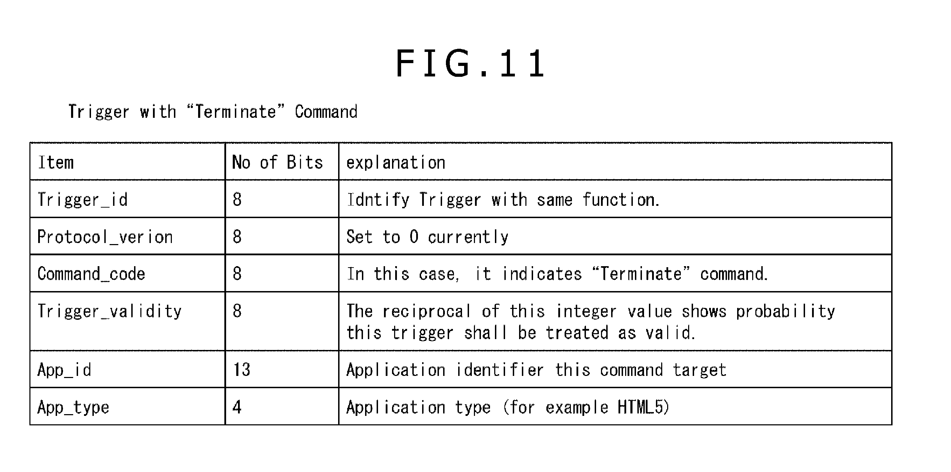

Fig. 11 is a tabular view listing items of trigger information indicating a Terminate command.
[Fig. 12]

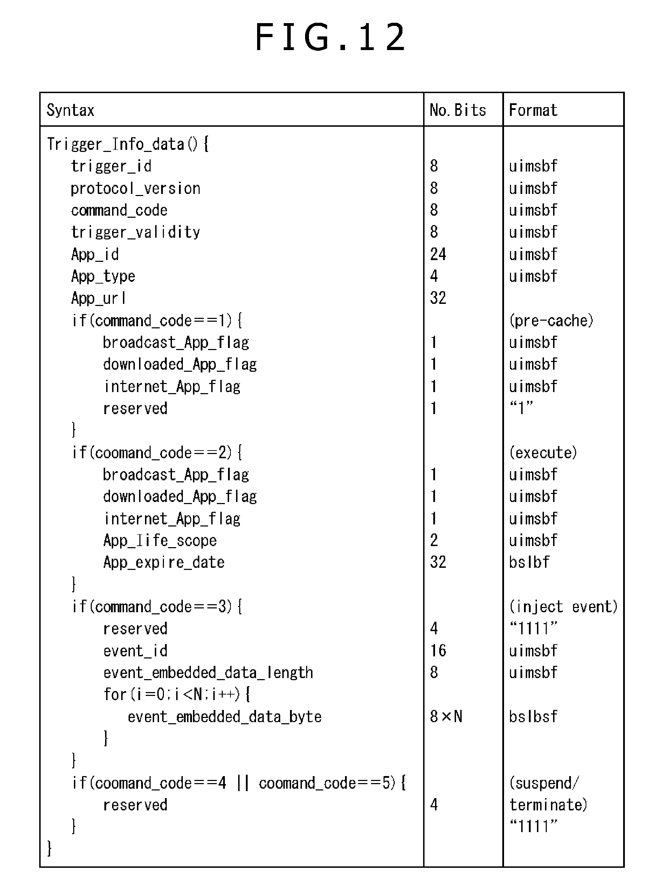

Fig. 12 is a tabular view showing a typical syntax of trigger information.
[Fig. 13]

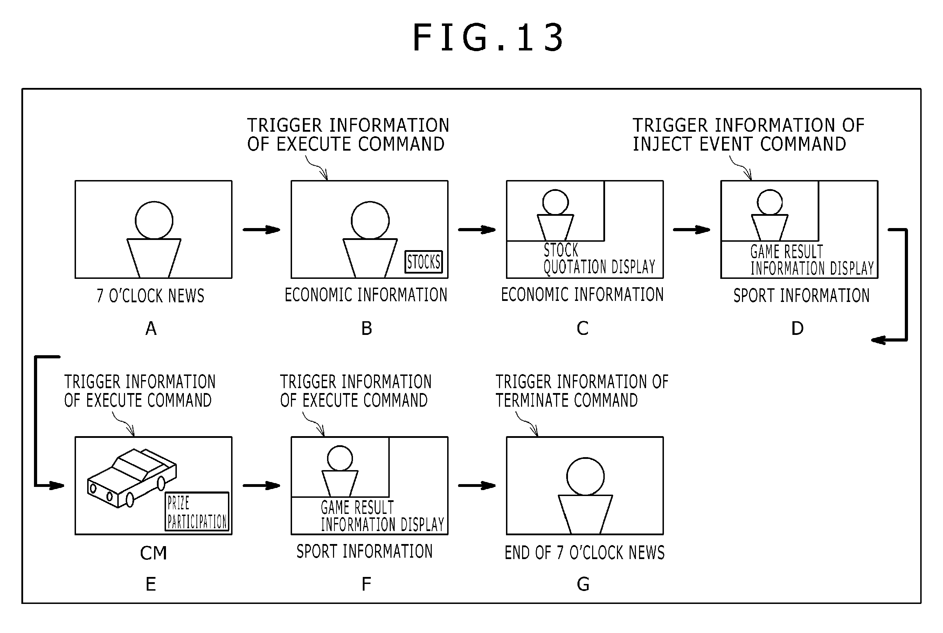

Fig. 13 is a schematic view showing examples of display in effect when an application program is executed in linkage with the progress of TV programs and CMs.
[Fig. 14]

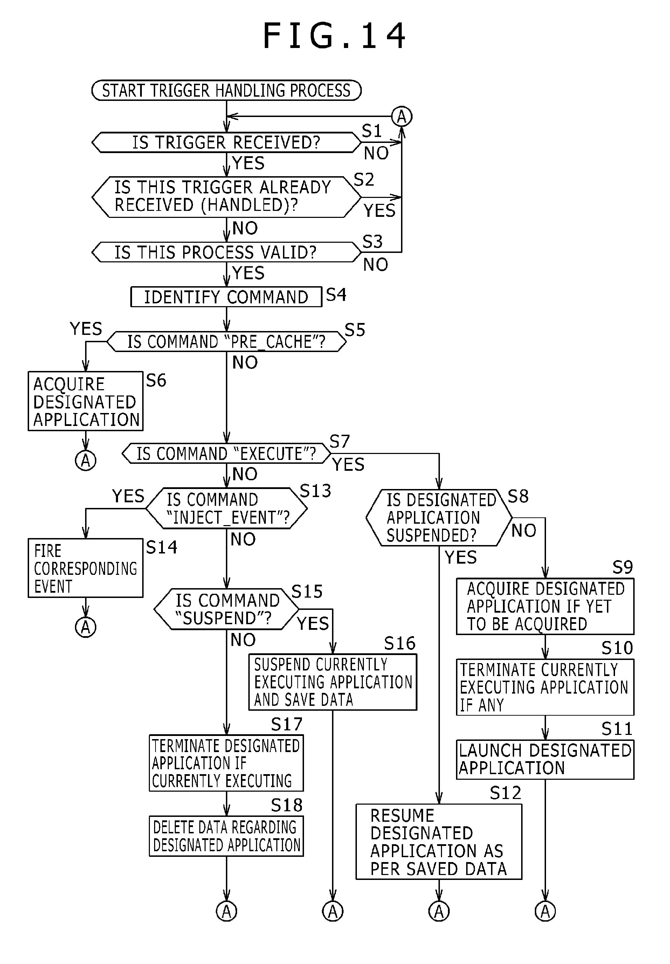

Fig. 14 is a flowchart explaining a trigger information handling process.
[Fig. 15]

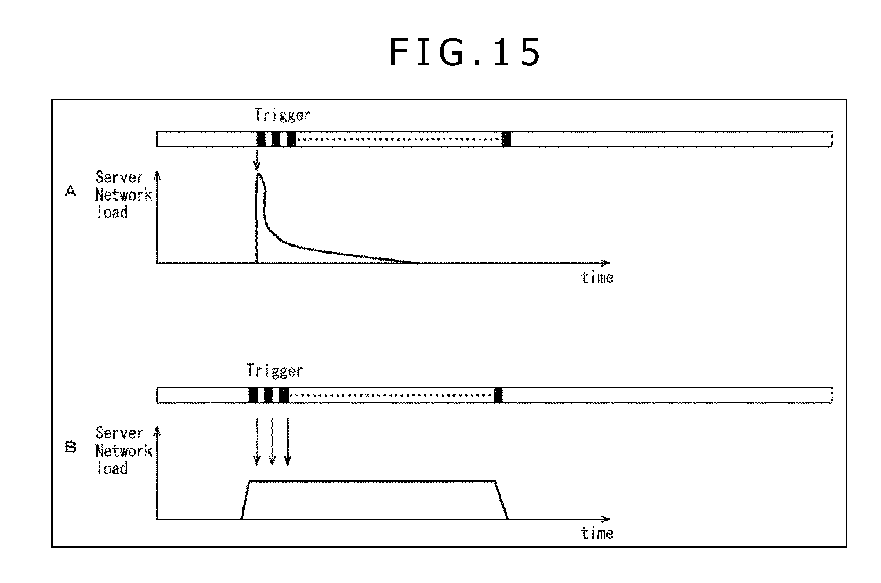

Fig. 15 is an explanatory view explaining an effect of Trigger_varidity.
[Fig. 16]

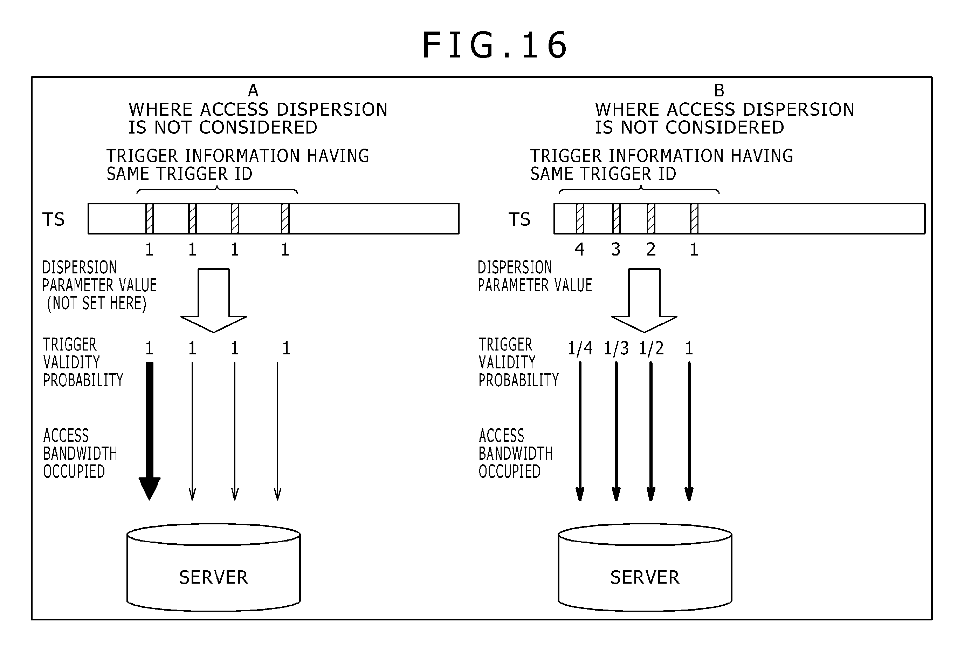

Fig. 16 is another explanatory view explaining the effect of Trigger_varidity.
[Fig. 17]

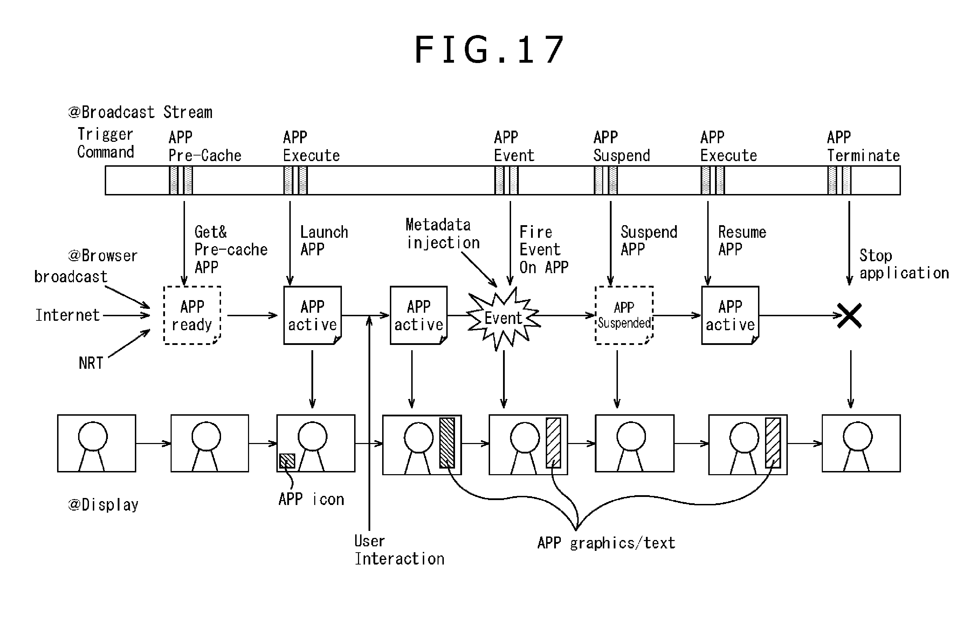

Fig. 17 is a schematic view showing a typical operation scenario for an application program.
[Fig. 18]

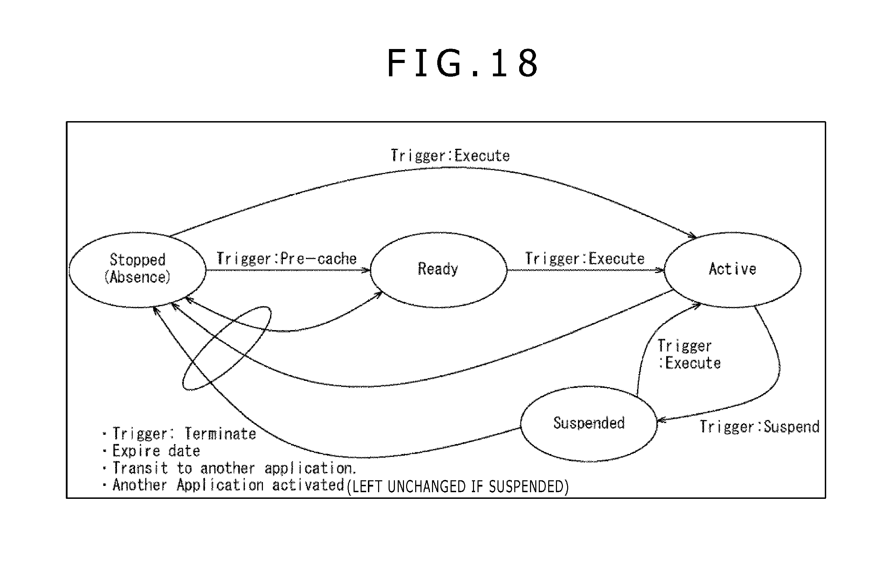

Fig. 18 is a state transition diagram of an application program on the reception apparatus.
[Fig. 19]

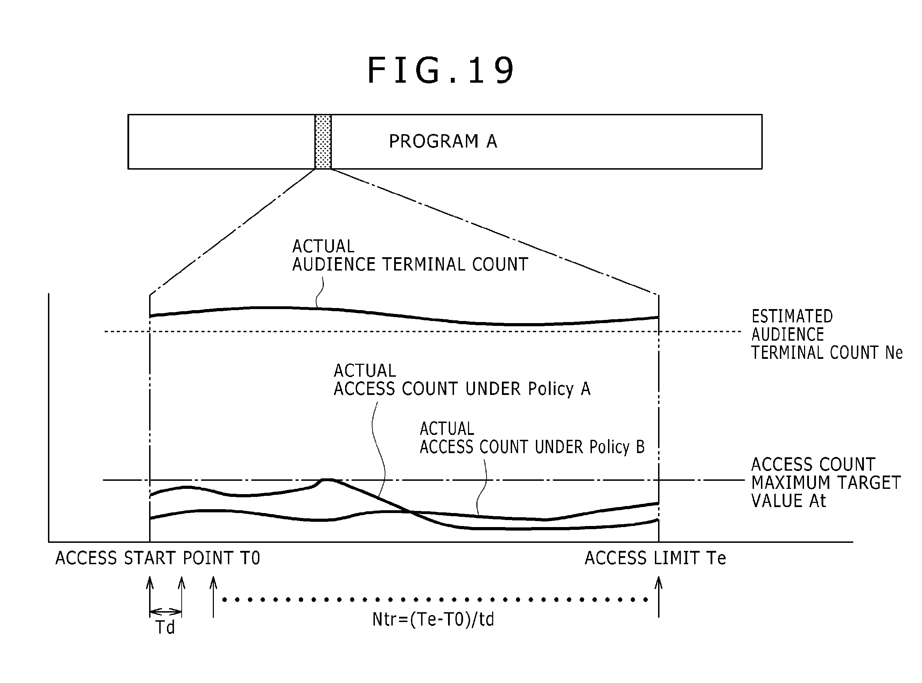

Fig. 19 is an explanatory view explaining a first operation scenario.
[Fig. 20]

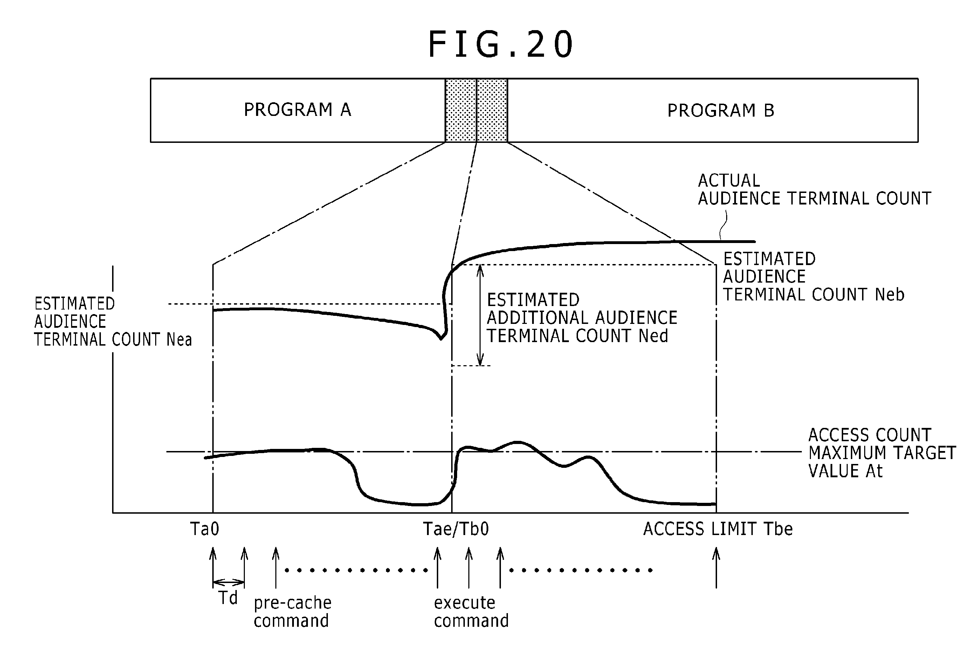

Fig. 20 is an explanatory view explaining a second operation scenario.
[Fig. 21]

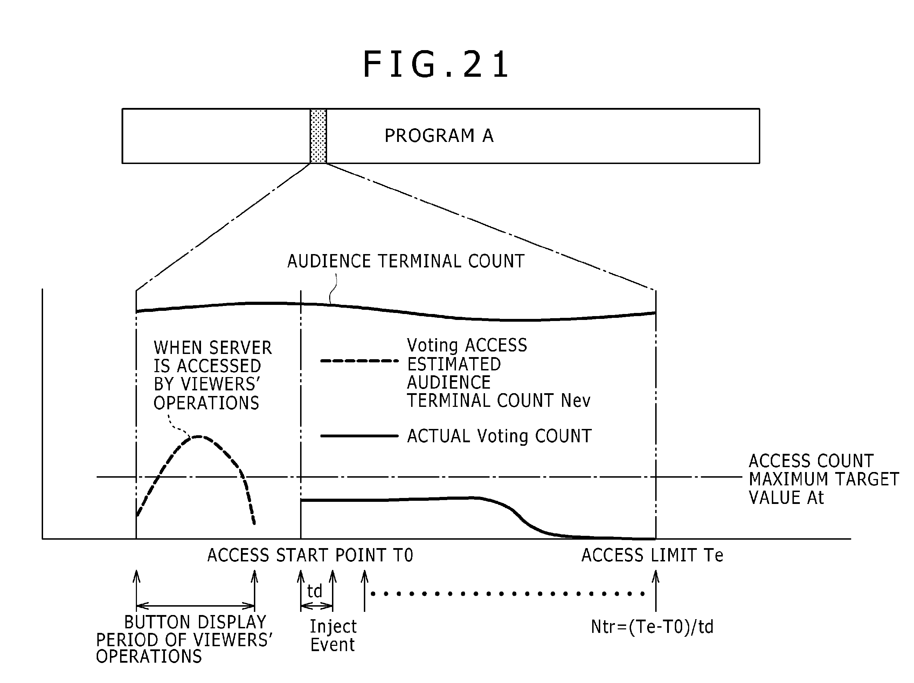

Fig. 21 is an explanatory view explaining a third operation scenario.
[Fig. 22]

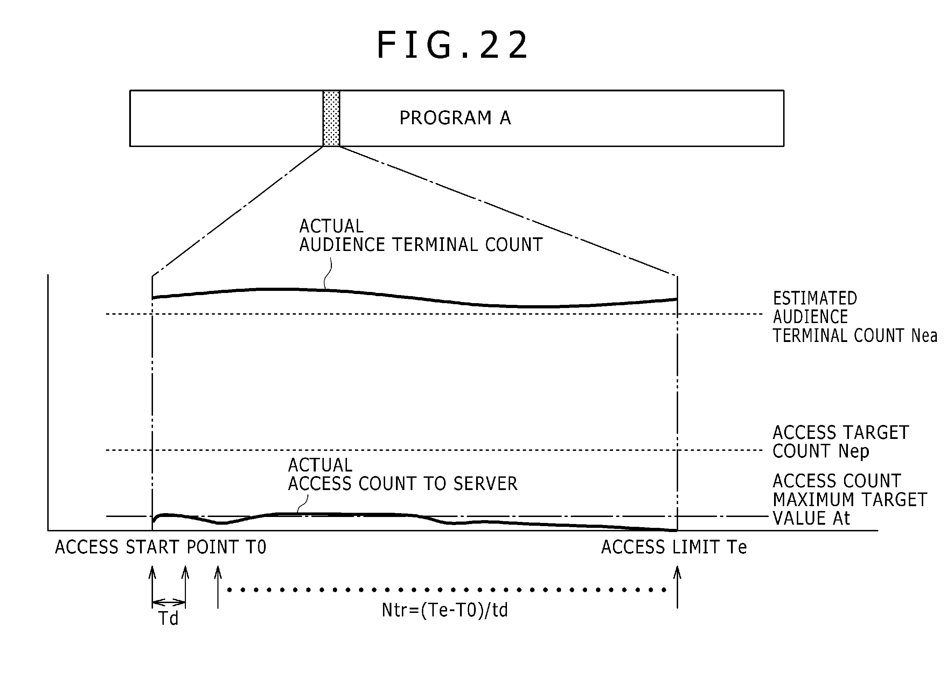

Fig. 22 is an explanatory view explaining a fourth operation scenario.
[Fig. 23]

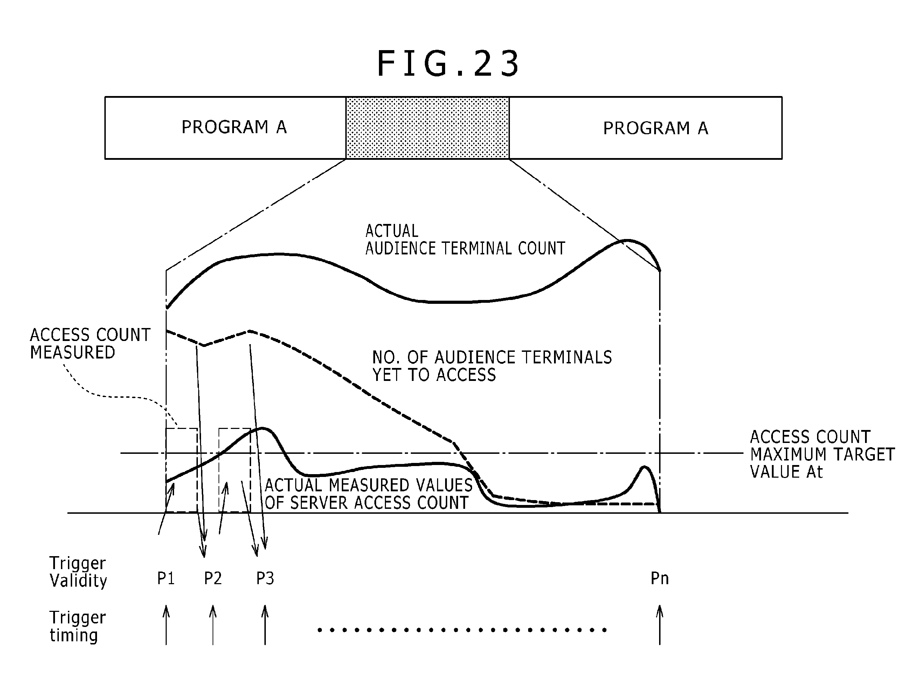

Fig. 23 is an explanatory view explaining a fifth operation scenario.
[Fig. 24]

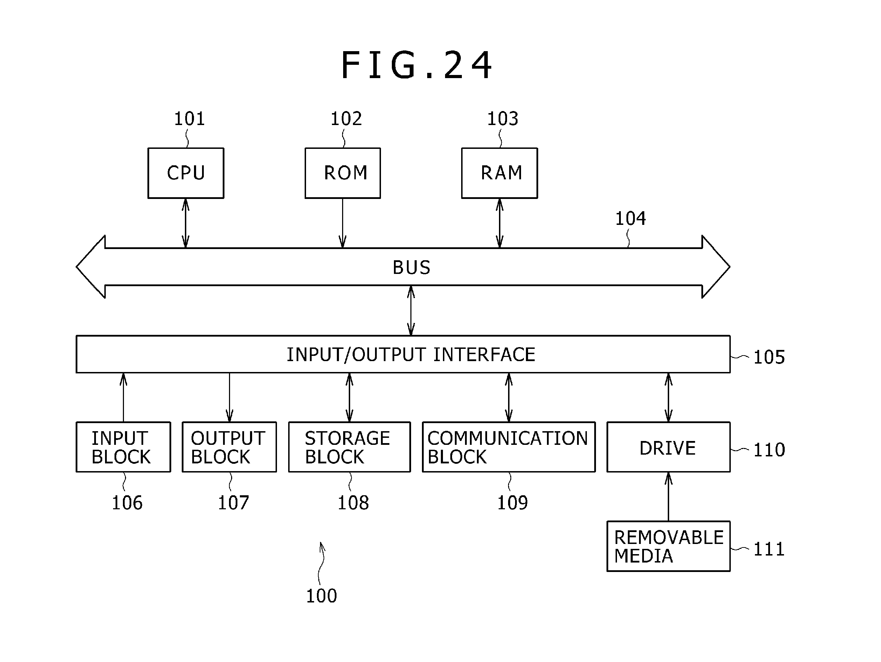

Fig. 24 is a block diagram showing a typical structure of a computer.

[Description of Embodiment]

A best mode of carrying out the invention (called an embodiment hereunder) is explained below in detail by reference to the accompanying drawings.

<1. Embodiment>

(Typical configuration of broadcasting system)

Fig. 2 shows a broadcasting system as one embodiment of this invention. This broadcasting system 30 is made up of a broadcast unit 41 and a server 46 set up on the side of a broadcast station, and a reception apparatus 60 installed on each viewer's side.
In the broadcasting system 30, each reception apparatus 60 accesses the server 46 in accordance with trigger information included in a digital TV broadcast signal when transmitted. More specifically, each reception apparatus 60 determines whether or not to access the server based on a validity probability parameter N written in an item of Trigger_varidity of the trigger information, whereby accesses by reception apparatuses 60 are dispersed over periods in which the trigger information is transmitted a plurality of number of times.

Incidentally, the process performed by the reception apparatus 60 to access the server 46 may involve downloading data broadcast content to be executed in linkage with AV content such as a TV program and CMs, or firing an event on a currently executing data broadcast content so as to upload predetermined information.

The data broadcast content is implemented when a computer of the reception apparatus executes an application program supplied to the reception apparatus. For this reason, the data broadcast content may also be called a data broadcast application program or a data broadcast application hereunder.

The broadcast unit 41 transmits the digital TV broadcast signal. Also, the broadcast unit 41 transmits the trigger information included in the digital TV broadcast signal to the reception apparatus 60, the trigger information serving as a command to control execution of the data broadcast content to be executed in linkage with the progress of a TV program and CMs.

The broadcast unit 41 includes an access count measurement block 42, a validity probability computation block 43, a trigger information generation block 44, and a transmission block 45.

The access count measurement block 42 measures the number of accesses from the reception apparatus 60 to the server 46. The validity probability computation block 43 computes the validity probability parameter N as one of items of the trigger information. Computing the validity probability parameter N involves using the measured access count with regard to the server 46, a previously estimated total number of reception apparatuses 60, an estimated audience rating of the program to be broadcast, an estimated number of operating reception apparatuses 60, and periods in which the same trigger information is repeatedly transmitted.

The trigger information generation block 44 generates the trigger information for controlling the execution of a data broadcast application by the reception apparatus 60. The validity probability parameter N computed by the validity probability computation block 43 is written to the item of Trigger_varidity of the generated trigger information. Alternatively, there may be trigger information that does not include the item of Trigger_varidity.

The trigger information includes information indicative of a command type and information identifying a corresponding data broadcast content, in addition to the above-mentioned validity probability parameter N. Details of the trigger information will be discussed later.

The transmission block 45 transmits the generated trigger information multiplexed in a transport stream (TS) of the digital TV broadcast signal or embedded in a video signal.

The server 46 supplies the reception apparatus 60 with (allows the reception apparatus 60 to download) a data broadcast application in response to a request from that reception apparatus 60 accessing the server 46 via the Internet 50. Also, the server 46 accepts access from the reception apparatus 60 (e.g., reply to a questionnaire) as an event fired on the currently executing data broadcast application (e.g., questionnaire presented during the ongoing program).

Upon receipt of the digital broadcast signal from the broadcast unit 41, the reception apparatus 60 outputs the picture and sound of AV content (TV program, CMs, etc.) to a monitor in a subsequent stage (not shown). Also, the reception apparatus 60 acquires data broadcast content by accessing the server 46 via the Internet 50. Furthermore, by executing the data broadcast content in response to the received trigger information, the reception apparatus 60 presents a user with diverse information in linkage with the progress of the program, or gains access to the server 46.

The reception apparatus 60 may be provided as an independent unit, or incorporated in a TV set, a video recorder or the like.

(Typical structure of reception apparatus)

Fig. 3 shows a typical structure of the reception apparatus 60. The reception apparatus 60 is made up of a tuner 61, a demultiplexing block 62, an audio decoder 63, an audio output block 64, a video decoder 65, a trigger detection block 66, a video output block 67, a control block 68, a memory 69, an operation block 70, a recording block 71, a communication interface 72, a cache memory 73, an application engine 74, and an application memory 75.

The tuner 61 receives the digital TV broadcast signal corresponding to a channel selected by the user, demodulates the received signal, and outputs the TS (transport stream) resulting from demodulation to the demultiplexing block 62. The demultiplexing block 62 demultiplexes the TS input from the tuner 61 into an audio coded signal, a video coded signal and a control signal, and outputs these signals to the audio decoder 63, video decoder 65 and control block 68, respectively.

Furthermore, the demultiplexing block 62 extracts a PCR (Program Clock Reference) packet containing trigger information from the TS and outputs the extracted packet to the trigger detection block 66.

The audio decoder 63 decodes the input audio coded signal and outputs an audio signal resulting from decoding to the audio output block 64. The audio output block 64 outputs the input audio signal to a subsequent stage (e.g., a speaker).

The video decoder 65 decodes the input video coded signal, and outputs a video signal resulting from decoding to the trigger detection block 66 and video output block 67.

The trigger detection block 66 continuously monitors the input video signal, detects the trigger information embedded in the video signal, and outputs the detected trigger information to the control block 68. (If the trigger information is placed only in the PCR packet of the TS, this operation of the trigger detection block 66 is not needed.) Also, the trigger detection block 66 extracts the trigger information from the PCR packet input from the demultiplexing block 62 and outputs the extracted trigger information to the control block 68.

The video output block 67 outputs the video signal input from the video decoder 65 to a subsequent stage. Also, the video output block 67 combines the picture of the data broadcast content input from the application engine 74 with the video signal input from the video decoder 65, and outputs the resulting composite signal to the subsequent stage.

The control block 68 controls the entire reception apparatus 60 by executing a control program recorded in the memory 69. Also, the control block 68 controls acquisition of a data broadcast application, launching of the application, firing of events, suspension of the application, termination of the application and the like on the basis of the trigger information input from the trigger detection block 66.

In the memory 69, the control program to be executed by the control block 68 is recorded. The control program may be updated based on update data acquired through the digital TV broadcast signal or over the Internet 50. The operation block 70 accepts various operations from the user and notifies the control block 68 of operation signals corresponding to these operations.

Also, the memory 69 retains the user's profile information such as the user's age, gender, address and other information input beforehand by the user.

The profile information may be referenced by the currently executing data broadcast application, for example, and may be used for such purposes as firing of an event only if the user's profile information meets predetermined conditions. The profile information may also be uploaded to the server 46.

Where a data broadcast application is distributed using the digital TV broadcast signal, the recording block 71 retains the downloaded data broadcast application on an internal recording medium.

The communication interface 72 under control of the application engine 74 connects to the server 46 via the Internet 50. The application engine 74 under control of the control block 68 acquires the data broadcast application from the server 46 through the communication interface 72 and over the Internet 50 and gets the acquired application retained in the cache memory 73.

The application engine 74 under control of the control block 68 reads the data broadcast application held in the recording block 71 or in the cache memory 73 and executes the retrieved application.

The application memory 75 is composed of a work memory 75A and a save memory 75B. The application engine 74 records to the work memory 75A data about the currently executing data broadcast application (specifically, the data including a layer of the currently displayed information). Also, when suspending the currently executing data broadcast application, the application engine 74 moves the data in the work memory 75A to the save memory 75B in the application memory 75. And when resuming the suspended data broadcast application, the application engine 74 moves the data in the save memory 75B to the work memory 75A so as to restore the state in effect before the suspension.

Incidentally, two areas of the same size making up the application memory 75 may be alternated in their roles, one serving as the work memory 75A and the other as the save memory 75B. This arrangement eliminates the need for moving data between the work memory 75A and the save memory 75B.

(Method for transmitting trigger information)

Next, a method for transmitting trigger information is explained.

As explained above, the trigger information may be placed in PCR packets of the TS of the digital TV broadcast signal, embedded in the video signal, or placed in a user data area of an MPEG-2 video stream multiplexed in the TS.

Fig. 4 illustrates a concept of having the trigger information placed in PCR packets of the TS of the digital TV broadcast signal.

As shown in Fig. 4, the trigger information is not necessarily placed in all PCR packets; the trigger information is placed in PCT packets only in a suitably timed manner for linkage with TV programs and CMs.

In consideration of radio disturbance and data dropouts in the reception apparatus 60 (reception error), the trigger information of the same substance (e.g., the same command for the same data broadcast application) is transmitted successively a plurality of number of times. However, even if the trigger information of the same substance is transmitted a number of times, the validity probability parameter N written in the item of Trigger_varidity of each trigger information is not necessarily the same.

Fig. 5 shows where trigger information is placed in the PCR packet. The PCR packet is a TS packet with its adaptation-field containing a PCR. The trigger information (Trigger Info_descriptor) is placed in transport_private_data_byte subsequent to the PCR. Incidentally, where the trigger information is placed, transport_private_data_flag in Various_flags preceding the PCR is set to 1.

Fig. 6 shows two examples in which trigger information is embedded in the video signal.

Subfigure A in Fig. 6 shows an example in which the trigger information is turned into a two-dimensional barcode superimposed onto a predetermined position of the video signal picture (bottom right corner in this example). Subfigure B in Fig. 6 shows an example in which the trigger information is turned into a video code superimposed onto several lines at the bottom of the video signal picture. The trigger information in Subfigures A and B is detected by the trigger detection block 66 of the reception apparatus 60.

In both examples of Subfigures A and B, the trigger information is superimposed on the picture of a TV program. For this reason, if the TV program is redistributed using a CATV network, for example, the trigger information is not deleted and can be transmitted to the reception apparatus 60.

Also in both examples of Subfigures A and B, the trigger information on the screen (two-dimensional barcode or video code) is visible to the user of the reception apparatus 60. If that is not desirable, the two-dimensional barcode or video code may be masked using the same pixels as those in the surroundings before being displayed.

The foregoing paragraphs have explained the examples in which the trigger information is transmitted embedded in the PCR. However, this is not limitative of the position in which the trigger information is placed or of the method for transmitting the trigger information.

(Details of trigger information)

Details of trigger information are explained next. The trigger information is classified into five types representative of the commands the information indicates. The five commands are a Pre_cache command, an Execute command, an Inject_event command, a Suspend command, and a Terminate command. These five commands may be supplemented with more commands.

Fig. 7 lists items included in the trigger information constituting the Pre_cache command. The Pre_cache command is a command that instructs the reception apparatus 60 to acquire a data broadcast application.

Trigger_id is information identifying this trigger information. Where the trigger information of the same substance is transmitted a plurality of number of times, Trigger_id of each trigger information is the same. Protcol_version indicates a protocol version of this trigger information. Command_code indicates a command type of this trigger information. In the case of Fig. 7, Command_code gives information indicating that this is the Pre_cache command.

Trigger_varidity has the validity probability parameter N written therein as a value designating the probability in effect when each reception apparatus 60 having received this trigger information determines to proceed with processing in accordance with this trigger information so that accesses to the server 46 by the reception apparatuses 60 are dispersed.

For example, in order to disperse accesses to the server 46 from the potentially numerous reception apparatuses 60 over four times, the trigger information of the same substance may be transmitted four times. The validity probability parameter N in the trigger information may then be set to N = 4 for the first time, N = 3 for the second time, N = 2 for the third time, and N = 1 for the fourth time.

With each reception apparatus 60 notified of the validity probability, a plurality of reception apparatuses 60 will have their accesses to the server 46 dispersed temporally to acquire the data broadcast application; their access will not be concentrated in a single time period.

Incidentally, the validity probability may always be set to 1 in the trigger information for controlling a process of not accessing the server 46 or the like (e.g., trigger information constituting the Suspend command or Terminate command, to be discussed later).

Access dispersion by use of Trigger_varidity will be discussed later in reference to Fig. 15, Fig. 16, Fig. 19 and the subsequent figures.

App_id is information identifying the data broadcast application to be acquired corresponding to this trigger information. App_type gives information indicative of the type of the data broadcast application corresponding to this trigger information (e.g., HTML5, BML, Java (registered trademark), etc.). App_url is a URL of a destination from which to acquire the data broadcast application (the destination is the server 46 in this case).

Broadcast_App_flag, Downloaded_App_flag, and Internet_App_flag are flags indicating where program data of the data broadcast application corresponding to this trigger information exists. Broadcast_App_flag is set to 1 when the data broadcast application corresponding to this trigger information may be acquired from the digital TV broadcast signal. Downloaded_App_flag is set to 1 when the data broadcast application corresponding to this trigger information has already been broadcast by a download broadcast service and can be acquired from a local storage (e.g., the recording block 71) if the reception apparatus 60 has received the data broadcast application in question. Internet_App_flag is set to 1 when the data broadcast application corresponding to this trigger information can be acquired from the server 46 via the Internet 50.

Fig. 8 lists items included in the trigger information constituting the Execute command. The Execute command is a command that instructs the reception apparatus 60 to launch a data broadcast application.

Trigger_id, Protcol_version, Command_code, Trigger_varidity, App_id, App_type, App_url, Broadcast_App_ flag, Downloaded_App_flag, and Internet_App_flag are the same as those of the trigger information constituting the Pre_cache command shown in Fig. 7. It should be noted that Command_code gives information indicative of the Execute command.

App_life_scope indicates whether or not to terminate the currently executing data broadcast application upon change of pictures. App_expire_date indicates the date and time at which the currently executing data broadcast application is terminated without receiving the Terminate command.

Fig. 9 lists items included in the trigger information constituting the Inject_event command. The Inject_event command is a command that instructs the reception apparatus 60 to fire an event on the currently executing data broadcast application.

In this context, the event indicates a timing for launching, say, a process of changing the information currently displayed by the data broadcast application, or a process of uploading (announcing) the result of an audience questionnaire conducted during the TV program to the server 46.

Trigger_id, Protcol_version, Command_code, Trigger_varidity, App_id, and App_type are the same as those of the trigger information constituting the Pre_cache command shown in Fig. 7. It should be noted that Command_code gives information indicative of the Inject_event command.

When a suitable validity probability parameter N is written to Trigger_varidity of the trigger information serving as the Inject_event command, it is possible to disperse event occurrence timings of the plurality of reception apparatuses 60 currently receiving the TV program. This makes it possible, for example, to disperse accesses from the plurality of reception apparatuses 60 to the server 46 thereby preventing access concentration in a single time period.

Event_id is information identifying an event to be fired on the data broadcast application designated by App_ id. Event Embedded Data gives data to be referenced upon firing of an event.

Fig. 10 lists items included in the trigger information constituting the Suspend command. The Suspend command is a command that instructs the reception apparatus 60 to suspend the currently executing data broadcast application.

Trigger_id, Protcol_version, Command_code, Trigger_varidity, App_id, and App_type are the same as those of the trigger information constituting the Pre_cache command shown in Fig. 7. It should be noted that Command_code gives information indicative of the Suspend command.

Fig. 11 lists items included in the trigger information constituting the Terminate command. The Terminate command is a command that instructs the reception apparatus 60 to terminate the currently executing data broadcast application.

Trigger_id, Protcol_version, Command_code, Trigger_varidity, App_id, and App_type are the same as those of the trigger information constituting the Pre_cache command shown in Fig. 7. It should be noted that Command_code gives information indicative of the Terminate command.

(Syntax of trigger information)

Fig. 12 shows a typical trigger information syntax that can support the trigger information constituting each of the above-described commands. The syntax of the trigger information is discretionary and is not limited to what is shown in Fig. 12.

(Explanation of operation)

Explained below is an outline of how the reception apparatus 60 operates in handling the received trigger information, in particular how a screen display varies.

Fig. 13 shows display transitions on the display of the reception apparatus 60 in effect when the reception apparatus 60 is caused to execute data broadcast applications addressing TV programs, CMs, etc.

For example, suppose that as shown in Subfigure A of Fig. 13, a TV program ("seven o'clock news" in this case) is being broadcast and that the substance of the program shifts to economic information. In such a case, the trigger information is transmitted which constitutes the Execute command for launching the data broadcast application corresponding to the program. Upon receipt of this trigger information, a data broadcast application is launched. On the screen on which the program is being displayed, there appears an icon prompting the user to display the data broadcast application (the icon is "Stocks" in this case).

When the user selects this icon, the screen gives a display stemming from the data broadcast application as shown in Subfigure C of Fig. 13 (the display is a stock quotation display in this case). In this manner, only when an icon prompting the user to display a data broadcast application is displayed, the display is brought about by the data broadcast application. This makes it possible to inhibit cases where the user who does not want any display from the data broadcast application is needlessly bothered thereby. It should be noted that the above display of the icon is a first display of the data broadcast application.

As the TV program transitions in substance (makes transition to sports information in this case), the trigger information is transmitted which constitutes the Inject_event command for firing an event in keeping with the transition. Upon receipt of this trigger information, the event is fired, and the display on the screen from the data broadcast application changes as shown in Subfigure D of Fig. 13 (the display is changed to game result information display in this case).

Then the trigger information is transmitted which constitutes the Suspend command for suspending the currently executing data broadcast application corresponding to the program. Upon receipt of this trigger information, the currently executing data broadcast application is suspended. Thereafter, the trigger information is transmitted which constitutes the Execute command for launching a data broadcast application corresponding to a CM. Upon receipt of this trigger information, the data broadcast application for the CM is launched. In this manner, on the screen where the CM is being displayed, an icon appears ("Prize participation" in this case) which prompts the user to get the data broadcast application displayed corresponding to the CM.

When the user selects this icon, a display stemming from the data broadcast application corresponding to the CM appears (display for prize participation in this case) on the screen.

At the end of the CM and upon resumption of the TV program, the trigger information is transmitted which constitutes the Execute command for resuming the data broadcast application corresponding to the TV program. Upon receipt of this trigger information, as shown in Subfigure F of Fig. 13, the data broadcast application corresponding to the CM is terminated and the display of the application is deleted. The display of the data broadcast application corresponding to the TV program is then resumed from the suspended state in effect earlier.

And at the end of the TV program, the trigger information is concurrently transmitted which constitutes the Terminate command for terminating the data broadcast application corresponding to the TV program. Upon receipt of this trigger information, the display of the data broadcast application is deleted from the screen and only the picture of the TV program is displayed as shown in Subfigure G of Fig. 13.

The method for displaying the data broadcast application is not limited to what is shown in Fig. 13 in which the display area of the TV program is reduced to allow for an area for displaying the data broadcast application. Alternatively, for example, the display of the data broadcast application may be superimposed on the display of the TV program.

Explained below is how the reception apparatus 60 operates upon receipt of trigger information (the process is called the trigger information handling process hereunder).

Fig. 14 is a flowchart explanatory of the trigger information handling process. The trigger information handling process is carried out repeatedly when the user is viewing a TV program, i.e., when the reception apparatus 60 is receiving the digital TV broadcast signal.

In step S1, the trigger detection block 66 waits until a PCR packet containing trigger information is input from the demultiplexing block 62 or until trigger information is detected from a video signal output from the video decoder 65. If the PCR packet containing the trigger information is input or if the trigger information is detected from the video signal, control is passed to step S2.

In step S2, the trigger detection block 66 outputs the trigger information to the control block 68. The control block 68 reads Trigger_id of the trigger information to determine whether or not the processing of step S4 and subsequent steps has already been performed with regard to this trigger information. If it is determined that the processing of step S3 and subsequent steps has already been carried out, control is returned to step S1 and the subsequent steps are repeated. On the other hand, if it is determined that the processing of step S4 and the subsequent steps has yet to be performed, control is passed to step S3.

In step S3, based on the validity probability parameter N written in Trigger_varidity of the trigger information, the control block 68 determines whether or not the process this time is valid (i.e., whether control is to be passed to step S4 and the subsequent steps or returned to step S1). If the trigger information does not have Trigger_varidity (including a case where the validity probability parameter N is set to 1), control is passed to step S4.

Explained here is how it is determined in step S3 whether or not the process this time is valid.

Fig. 15 compares two cases, one having Trigger_varidity not furnished (including the case where the validity probability parameter N is set to 1), the other case having Trigger_varidity furnished. The same trigger information is transmitted a plurality of number of times. However, where Trigger_varidity is not furnished, the majority of reception apparatuses 60 react to the first trigger information, resulting in access concentration on the server 46 or the like, as shown in Subfigure A of Fig. 15.

By contrast, where Trigger_varidity is furnished and the validity probability is set to a suitable value, the currently operating reception apparatuses 60 can be arranged to react in dispersed fashion to the same trigger information transmitted a plurality of number of times, as shown in Subfigure B of Fig. 15. This makes it possible to suppress access concentration on the server 46 or the like.

For example, as shown in Subfigure B of Fig. 16, the broadcast station might intend to have accesses to the server 46 or the like from the potentially numerous, currently operating reception apparatuses 60 dispersed in four separate time periods. In such a case, the broadcast unit 11 transmits the same trigger information four times, with the validity probability parameter N in Trigger_varidity set to 4 for the trigger information sent for the first time, to 3 for the second time, to 2 for the third time, and to 1 for the fourth time.

In response, the control block 68 of the reception apparatus 60 determines whether or not the process this time is valid using a random number or the like under the condition of the validity probability.

Given the above, suppose that 100,000 reception apparatuses 60 simultaneously perform the trigger information handling process. In such a case, the trigger information sent for the first time (validity probability 1/N = 1/4) allows about 25,000 (= 100,000/4) reception apparatuses 60 to determine that the process is valid; the trigger information sent for the second time (validity probability = 1/3) allows another 25,000 (= 75,000/3) reception apparatuses 60 to determine that the process is valid; the trigger information sent for the third time (validity probability = 1/2) allows another 25,000 (= 50,000/2) reception apparatuses 60 to determine that the process is valid; and the trigger information sent for the fourth time (validity probability = 1/1) allows all remaining (= 25,000/1) reception apparatuses 60 to determine that the process is valid.

Returning to Fig. 14, in step S4, the control block 68 reads Command_code of the trigger information to determine whether the command indicated by this trigger information is the Pre_cache, Execute, Inject_event, Suspend, or Terminate command.

In step S5, the control block 68 determines whether or not the result of the determination in step S4 is the Pre_cache command. If it is determined that the result is the Pre_cache command, control is passed to step S6.

In step S6, the program data of the data broadcast application identified by App_id of this trigger information is acquired.

Specifically, if Broadcast_App_flag of this trigger information is set to 1, the program data of the data broadcast application identified by App_id is acquired from the TV broadcast signal and recorded to the recording block 71. If Downloaded_App_flag of this trigger information is set to 1, the program data of the data broadcast application identified by App_id is acquired from the recording block 71 serving as a local storage. If Internet_App_flag of this trigger information is set to 1, the program data of the data broadcast application identified by App_id is acquired from the server 46 via the Internet 50 and recorded to the cache memory 73.

If at least two of Broadcast_App_flag, Downloaded_App_flag, and Internet_App_flag are set to 1 each, the program data of the data broadcast application identified by App_id of this trigger information may be acquired depending on the convenience on the side of the reception apparatus 60. Thereafter, control is returned to step S1 and the subsequent steps are repeated.

If it is determined in step S5 that the result of the determination in step S4 is not the Pre_cache command, control is passed to step S7. In step S7, the control block 68 determines whether or not the result of the determination in step S4 is the Execute command. If it is determined that the result is the Execute command, control is passed to step S8.

In step S8, the application engine 74 under control of the control block 68 determines whether or not the data broadcast application identified by App_id of this trigger information is being suspended (i.e., in the suspended state). Specifically, if the save memory 75B holds data indicating that the data broadcast application identified by App_id is in the suspended state, then it is determined that the data broadcast application in question is being suspended.

If it is determined in step S8 that the data broadcast application identified by App_id is not suspended, control is passed to step S9. In step S9, the application engine 74 under control of the control block 68 acquires the program data of the data broadcast application identified by App_id if the data has yet to be acquired (i.e., not found in the recording block 71 or in the cache memory 73).

In step S10, the application engine 74 under control of the control block 68 terminates the currently executing data broadcast application if there exists such an application.

In step S11, the application engine 74 under control of the control block 68 launches the data broadcast application identified by App_id. Thereafter, control is returned to step S1 and the subsequent steps are repeated.

If it is determined in step S8 that the data broadcast application identified by App_id is being suspended (in the suspended state), control is passed to step S12. In step S12, the application engine 74 under control of the control block 68 moves the data in the save memory 75B into the work memory 75A and launches the data broadcast application identified by App_id. In this manner, the suspended data broadcast application identified by App_id is resumed from its suspended state. Thereafter, control is returned to step S1 and the subsequent steps are repeated.

If it is determined in step S7 that the result of the determination in step S4 is not the Execute command, control is passed to step S13. In step S13, the control block 68 determines whether or not the result of the determination in step S4 is the Inject_event command. If it is determined that the result is the Inject_event command, control is passed to step S14.

In step S14, only if App_id of this trigger information coincides with App_id of the currently executing data broadcast application, does the control block 68 control the application engine 74 to fire (execute) an event corresponding to Event_id of the trigger information in the currently executing application. Thereafter, control is returned to step S1 and the subsequent steps are repeated.

If it is determined in step S13 that the result of the determination in step S4 is not the Inject_event command, control is passed to step S15. In step S15, the control block 68 determines whether or not the result of the determination in step S4 is the Suspend command. If it is determined that the result is the Suspend command, control is passed to step S16.

In step S16, the application engine 74 under control of the control block 68 saves into the save memory 75B the data indicating the state of the currently executing data broadcast application (i.e., the data currently written in the work memory 75A, including information indicative of the layer of the currently displayed information if the displayed information has a hierarchical structure). Thereafter, control is returned to step S1 and the subsequent steps are repeated.

If it is determined in step S15 that the result of the determination in step S4 is not the Suspend command, that result of step S4 must have been the Terminate command. Control is then passed to step S17. In step S17, the application engine 74 under control of the control block 68 terminates the data broadcast application identified by App_id if that application is currently executing. In step S18, the application engine 74 under control of the control block 68 deletes from the work memory 75A and save memory 75B the data about the data broadcast application identified by App_id and deletes the program data of the data broadcast application from the recording block 71 or from the cache memory 73. Thereafter, control is returned to step S1 and the subsequent steps are repeated.

The preceding paragraph completes the explanation of the trigger information handling process. According to the above-described trigger information handling process, it is possible to launch a data broadcast application in linkage with a TV program or CMs, to fire an event, and to terminate the application. It is also possible to suspend the currently executing data broadcast application with its currently executing state kept unchanged and to resume the suspended application from its suspended state.

The trigger information handling process further makes it possible to operate the data broadcast application as explained below.

Fig. 17 shows a typical operation scenario for the data broadcast application.

When the broadcast unit 41 transmits the trigger information constituting the Pre_cache command giving an instruction to acquire the program data of the data broadcast application corresponding to an ongoing TV program in keeping with the progress of that program, the reception apparatus 60 upon receipt of that trigger information acquires the program data of the broadcast application.

Then, when the broadcast unit 41 transmits the trigger information constituting the Execute command for the data broadcast application corresponding to the TV program, the reception apparatus 60 upon receipt of that trigger information launches the data broadcast application. The launching causes an icon to appear superimposed on the picture of the TV program, the icon prompting the user to display the data broadcast application.

When the user selects that icon, the screen gives the display of the data broadcast application superimposed on the picture of the TV program.

When the broadcast unit 41 transmits the trigger information constituting the Inject_event command in keeping with the progress of the TV program, the reception apparatus 60 upon receipt of that trigger information fires an event (e.g., changes the display) on the currently executing data broadcast application.

And when the broadcast unit 41 transmits the trigger information constituting the Suspend command for the data broadcast application in a suitably timed manner, the reception apparatus 60 upon receipt of that trigger information suspends the currently executing data broadcast application (related data is placed into the save memory 75B). Thereafter, when the broadcast unit 41 transmits the trigger information constituting the Execute command for the data broadcast application, the reception apparatus 60 upon receipt of that trigger information resumes the suspended data broadcast application.

Furthermore, when the broadcast unit 41 transmits the trigger information constituting the Terminate command in keeping with the end of the TV program, the reception apparatus 60 upon receipt of that trigger information terminates the currently executing data broadcast application.

(State transitions of data broadcast application)

Fig. 18 shows state transitions of a data broadcast application on the reception apparatus 60.

As shown in Fig. 18, the data broadcast application makes transition to one of four states: stopped state, ready state, active state, and suspended state.

The stopped state is a state in which the data broadcast application has yet to be executed, with the program data of that application not acquired yet. The ready state is a state in which the program data of the data broadcast application has been acquired but has yet to be executed. The active state is a state in which the data broadcast application has been launched and is currently executing. The suspended state is a state in which the execution of the data broadcast application is suspended, with information indicative of the suspended state being held in the save memory 75B.

When the data broadcast application is in the stopped state, the trigger information constituting the Pre_cache command may be received and the program data of that data broadcast application may be acquired accordingly. In this case, the data broadcast application makes transition to the ready state.

When the data broadcast application is in the stopped state or in the ready state, the trigger information constituting the Execute command may be received and the data broadcast application may be launched accordingly. In this case, the data broadcast application makes transition to the active state.

When the data broadcast application is in the active state, the trigger information constituting the Suspend command may be received and the currently executing data broadcast application may be suspended accordingly. In this case, the data broadcast application makes transition to the suspended state.

When the data broadcast application is in the suspended state, the trigger information constituting the Execute command may be received and the suspended data broadcast application may be resumed accordingly. In this case, the data broadcast application makes transition to the active state.

When the data broadcast application is in the ready state, active state, or suspended state, receipt of the trigger information constituting the Terminate command causes the data broadcast application to make transition to the stopped state from the ready state, from the active state, or from the suspended state. In addition to the transition to the stopped state caused by the trigger information constituting the Terminate command, transition to the stopped state can also occur when App_expire_date in the trigger information has expired, when another data broadcast application is executed, or when the received channel is changed.

(Operation scenarios for access dispersion using Trigger_varidity)

Explained below in detail are methods for dispersing accesses to the server 46 from the currently operating numerous reception apparatuses 60, the methods involving suitably setting the validity probability parameter N to be written to the item of Trigger_varidity of the trigger information.

First, assumptions for setting the appropriate validity probability parameter N are discussed below.

The audience rating of a TV program to be executed corresponding to a data broadcast application can be estimated on the basis of past statistics (e.g., average audience ratings of similar TV programs). Thus it is also possible to estimate the total number of reception apparatuses 60 viewing the TV program in question (the number may be called the estimated audience terminal count Ne hereunder).

A shortest cycle of the transmission frequency (transmission interval) with which the trigger information having the same substance but different validity probability is transmitted a plurality of number of times is assumed to be the time required for the majority of the reception apparatuses 60 having received the trigger information to determine that the information is valid and to complete their access to the server 46. The time may be determined to be, say, two seconds based on actual measured values and empirical values. The time may be called a unit time td hereunder.

A time range in which to disperse accesses to the server 46 (called a server access period hereunder) is determined in accordance with the purpose of the access for each data broadcast application. As such, the server access period is defined by two points in time: access start point T0, and access limit Te. For example, the server access period for the trigger information constituting the Execute command may be defined to be a shorter period of time than the server access period for the trigger information constituting the Pre_cache command transmitted earlier.

A maximum number of accesses per unit time td from the reception apparatuses 60 accessing the server 46 (the count may be called an access count maximum target value At hereunder) is dependent on the processing power of the server. Thus when accesses to the server 64 are to be dispersed, it is necessary to operate in such a manner that on a plane formed by a time axis (horizontal axis) and an access count axis (vertical axis), points each indicative of an access count per unit time td fall within a rectangular area stipulated by an access dispersion time defined on the time axis and by the access count maximum target value At on the access count axis.

Even when the access count points fall within the above-mentioned rectangular area, it is further necessary to comply with one of two policies: accesses are desired to be settled in the shortest possible time period, i.e., the server access period is desired to be as short as possible (policy A); and the access cont per unit time td is desired to be as small as possible (policy B).

It is assumed that any effect stemming from traffic congestion on the Internet 50 caused by factors other than the access from the reception apparatuses 60 to the server 46 is not considered.

Although the server 46 could perform processes other than that of addressing the access from the reception apparatuses 60, it is assumed here that the entire processing power of the server 46 is dedicated to the process of handling accesses from the reception apparatuses 60.

If the reception apparatuses 60 are to access the server 46 at arbitrary timings designated by their users, their accesses are assumed to be dispersed evenly over time.

Based on the above assumptions, first to fifth operation scenarios are proposed as follows.

(First operation scenario)

Fig. 19 is an explanatory view explaining the first operation scenario. The purpose of the first operation scenario is to acquire and launch a new data broadcast application halfway through a TV program A.

The first operation scenario assumes a case where the total number of reception apparatuses 60 viewing the TV program A remains virtually unchanged during the access dispersion period for acquiring the data broadcast application. In this case, the total number $Ne$ of reception apparatuses 60 viewing the TV program A is estimated from the estimated audience rating of the TV program A (based on past statistics, etc.).

Given that the unit time is $td$, the access count maximum target value is $At$, and the server access period is $(Te - T0)$, the number of times $Ntr$ the trigger information of the same substance can be transmitted during the server access period is defined as $Ntr = (Te - T0)/td$. Thus the total number of accesses that can be handled by the server 46 during the server access period is given as $At \cdot Ntr$.

At this point, if $At \cdot Ntr$ fails to reach the estimated audience terminal count $Ne$ $(Ne > At \cdot Ntr)$, it is necessary to prolong the server access period or raise the access count maximum target value $At$.

If the policy A is adopted under which accesses to the server 46 are desired to be settled as soon as possible, the validity probability parameter $N = P1$ in the item of trigger validity of the trigger information to be transmitted for the first time is set to $P1 = Ne/At$ (a rounded-up integer) so that accesses from as many reception apparatuses 60 as the estimated audience terminal count $Ne$ may be held at the access count maximum target value $At$. The validity probability parameter $N = Pk$ in the item of trigger validity of the trigger information to be transmitted for the k-th time (k is an integer of at least 2) is set to $Pk = (Ne - (k - 1)At)/At = P1 - (k - 1)$. After $Pk$ drops to equal to or below 1, $Pk$ is assumed to be set continuously to 1.

If the policy B is adopted under which the access count per unit time $td$ is desired to be minimized, the estimated audience terminal count $Ne$ is divided evenly by the trigger count $Ntr = (Te - T0)/Td$, and the validity probability parameter $N$ in the item of trigger validity of the trigger information to be transmitted for the first time is set to $N = P1 = Ntr$. The validity probability parameter $N$ in the item of trigger validity of the trigger information to be transmitted for the k-th time (k is an integer of at least 2) is set to $N = Pk \approx Nt - (k - 1)$.

(Second operation scenario)

Fig. 20 is an explanatory view explaining the second operation scenario. The purpose of the second operation scenario is that in order to launch a data broadcast application the moment a TV program B is started, acquisition of the data broadcast application corresponding to the TV program B is started before the start of the program B, i.e., while the program A is still broadcast on the same channel so that accesses to the server 46 may be dispersed between the latter half of the program A and the first half of the program B. Specifically, the trigger information constituting the Pre_cache command is transmitted while the TV program A is still being broadcast, and the trigger information constituting the Execute command is transmitted at the start of the TV program B.

The second operation scenario considers a fact that there exist reception apparatuses 60 not viewing the TV program B following the TV program A and that there are reception apparatuses 60 switching from another channel to this channel to view the TV program B. That is, it is assumed for the scenario that the total number of reception apparatuses 60 viewing the TV program A is an estimated audience terminal count $Nea$, that the total number of reception apparatuses 60 viewing the TV program B is an estimated audience terminal count $Neb$, and that the total number of reception apparatuses 60 switching from another channel to this channel to start viewing the TV program B is an estimated additional audience terminal count $Ned$.

If the policy A is adopted under which the server access period (from $Ta0$ to $Tae$) during broadcast of the TV program A is to be as short as possible, the validity probability parameters are set to be the same as those of the above-described first operation scenario. That is, the validity probability parameter $N = P1$ in the item of trigger validity of the trigger information constituting the Pre_cache command to be transmitted for the first time during the TV program A is set to $P1 = Nea/At$ (a rounded-up integer) so that accesses from as many reception apparatuses 60 as the estimated audience terminal count $Ne$ may be held at the access count maximum target value $At$. The validity probability parameter $N = Pk$ in the item of trigger validity of the trigger information to be transmitted for the k-th time (k is an integer of at least 2) is set to $Pk = (Nea - (k - 1)At)/At \approx P1 - (k - 1)$. After $Pk$ drops to equal to or below 1, $Pk$ is assumed to be set continuously to 1.

After the TV program B is started, accesses from as many reception apparatuses 60 as the estimated additional audience terminal count $Ned$ switching from another channel to this channel to start viewing the TV program B need only be dispersed. Thus the validity probability parameter $N = P1$ in the item of trigger validity of the trigger information constituting the Execute command to be transmitted for the first time during the TV program B is set to $P1 = Ned/At$ (a rounded-up integer). The validity probability parameter $N = Pk$ in the item of trigger validity of the trigger information to be transmitted for the k-th time (k is an integer of at least 2) is set to $Pk = (Ned - (k - 1)At)/At = P1 - (k - 1)$. After $Pk$ drops to equal to or below 1, Pk is assumed to be set continuously to 1.

(Third operation scenario)

Fig. 21 is an explanatory view explaining the third operation scenario. The purpose of the third operation scenario is that a data broadcast application is used to conduct voting participated in voluntarily by viewers in a predetermined time slot during broadcast of the program A, with the server 46 collecting the results of the voting. Specifically, the data broadcast application may be used to display, say, voting buttons in linkage with the progress of the TV program A and prompt the viewer to operate the buttons. However, at the time that the buttons are operated, the results of the voting are not reported to the server 46. Instead, the voting results are dispersed over time when reported to the server 46 as events fired by the trigger information constituting the Inject_event command.

Thus under the third operation scenario, a suitable validity probability parameter N need only be designated in Trigger Validity of the trigger information constituting the Inject_event command.

It should be noted that the above-mentioned voting is conducted with voluntary participation by viewers. That means it is difficult to predict with high probability an estimated audience terminal count Nev as the total number of reception apparatuses 60 accessing the server 46. Thus the third operation scenario adopts the policy B under which the access count per unit time td is minimized. Specifically, the estimated audience terminal count Nev is divided evenly by the trigger count Ntr = (Te - T0)/Td, and the validity probability parameter N in the item of trigger validity of the trigger information constituting the Inject_event command to be transmitted for the first time is set to N = P1 = Ntr. The validity probability parameter N in the item of trigger validity of the trigger information to be transmitted for the k-th time (k is an integer of at least 2) is set to N = Pk $\approx$ Nt - (k - 1).

(Fourth operation scenario)

Fig. 22 is an explanatory view explaining the fourth operation scenario. The purpose of the fourth operation scenario is that a data broadcast application is used to have a predetermined percentage of reception apparatuses 60 randomly sampled from all reception apparatuses 60 receiving the TV program A (in practice, each reception apparatus 60 randomly determines participation based on the validity probability), with the sampled reception apparatuses 60 reporting their users' profile information to the server 46 as an event of the data broadcast application.

When only a specific percentage of all the reception apparatuses 60 receiving the TV program A are allowed to access the server 46, it is possible to acquire statistical information such as profile tendency of the audience without overloading the server 46.

Specifically, the estimated audience terminal count Ne under the above-described first operation scenario need only be replaced with an access target count Nep obtained by multiplying the estimated audience terminal count Ne by a predetermined percentage.

That is, if the policy A is adopted under which accesses to the server 46 are desired to be settled as soon as possible, the validity probability parameter N = P1 in the item of trigger validity of the trigger information constituting the Inject_event command to be transmitted for the first time is set to P1 = Nep/At (a rounded-up integer). The validity probability parameter N = Pk in the item of trigger validity of the trigger information to be transmitted for the k-th time (k is an integer of at least 2) is set to Pk = (Nep - (k - 1)At)/At = P1 - (k - 1). After Pk drops to equal to or below 1, Pk is assumed to be set continuously to 1.

(Fifth operation scenario)

Fig. 23 is an explanatory view explaining the fifth operation scenario. According to the first to fourth operation scenarios discussed above, the total number of reception apparatuses 60 receiving the TV program was estimated based primarily on past statistics. According to the fifth operation scenario, by contrast, the number of accesses to the server 64 by the reception apparatuses 60 responding to the trigger information transmitted for the first time is actually measured. On the basis of these actual measured values, the total number of reception apparatuses 60 is computed. This makes it possible with relatively high accuracy to obtain the total number of reception apparatuses 60 receiving the TV program, so that the validity probability parameter N in the item of trigger validity of the trigger information transmitted from the second time and afterwards may be set to more appropriate values than before.

Specifically, with regard to the trigger information to be transmitted for the first time, the validity probability parameter N = P1 is computed based on the estimated audience terminal count Ne as in the case of the above-described first operation scenario. An access count a1 indicative of accesses from the reception apparatuses 60 responding to that trigger information is measured. A highly probable estimate number of the reception apparatuses 60 receiving the TV program A is then computed as P1 · a1.

With regard to the trigger information to be transmitted for the second time and afterwards, the validity probability parameter N = Pk (k is at least 2) is computed, as defined by an equation shown below, by subtracting the actual access count from the highly probable estimate number P1 · a1 of the reception apparatuses 60 receiving the TV program A, whereby the number of remaining reception apparatuses 60 yet to access the server is calculated highly accurately:

$$Pk = (P1 \cdot a1 - \textstyle\sum ai) \times c(a(k-1) - At)/At$$

where, c denotes a coefficient for multiplication with a difference between the access count and the access count maximum target value At, the coefficient being a feedback element used when the access count fluctuates above and below the access count maximum target value At.

As explained above, when the validity probability parameter N in the item of trigger validity of the trigger information is suitably set, accesses from the reception apparatuses 60 to the server 46 can be dispersed over time. In particular, if the fifth operation scenario is adopted, the total number of currently receiving reception apparatuses 60 can be estimated more accurately than before, whereby accesses to the server 46 may be dispersed more appropriately.

Incidentally, the series of processes described above may be executed either by hardware or by software. Where the software-based series of processing is to be carried out, programs constituting the software may be installed upon use from a suitable program recording medium into either a computer incorporated beforehand in a dedicated hardware or a general-purpose personal computer or like equipment capable of executing diverse functions by installing diverse programs.

Fig. 24 is a block diagram showing a typical structure of a hardware of a computer that performs the above-described series of processes using programs.

In this computer 100, a CPU (Central Processing Unit) 101, a ROM (Read Only Memory) 102, and a RAM (Random Access Memory) 103 are interconnected via a bus 104.

The bus 104 is further connected with an input/output interface 105. The input/output interface 105 is connected with an input block 106 typically made up of a keyboard, a mouse and a microphone; an output block 107 usually composed of a display and speakers; a storage block 108 generally formed by a hard disk or a nonvolatile memory; a communication block 109 typically constituted by a network interface; and a drive 110 for driving removable media 111 such as a magnetic disk, an optical disk, a magneto-optical disk, or a semiconductor memory.

In the computer structured as outlined above, the CPU 101 performs the above-described series of processes by loading programs from, say, the storage block 108 into the RAM 103 through the input/output interface 105 and bus 104 and by executing the loaded programs.

Also, the programs to be executed by the computer may be processed in the depicted sequence of this description (i.e., on a time series basis), in parallel, or in otherwise appropriately timed fashion such as when they are invoked as needed.

The programs may be processed by a single computer or by a plurality of computers on a distributed basis. The programs may also be transferred to a remote computer or computers for execution.

In this description, the term "system" refers to an entire configuration made up of a plurality of component devices.

Also, it should be understood that this invention when embodied is not limited to the above-described embodiment and that various modifications, variations and alternatives may be made of this invention so far as they are within the spirit and scope thereof.

[Reference Signs List]

| 30 | Broadcasting system |
|---|---|
| 41 | Broadcast unit |
| 42 | Application server |
| 43 | Audience rating measurement server |
| 60 | Reception apparatus |
| 61 | Tuner |
| 62 | Demultiplexing block |
| 63 | Audio decoder |
| 64 | Audio output block |
| 65 | Video decoder |
| 66 | Trigger detection block |
| 67 | Video output block |

(continued)

| 68 | Control block |
|---|---|
| 69 | Memory |
| 70 | Operation block |
| 71 | Recording block |
| 72 | Communication interface |
| 73 | Cache memory |
| 74 | Application engine |
| 75 | Memory |
| 75A | Work memory |
| 75B | Save memory |

FIG. 1

BROADCAST BAND
VIDEO
AUDIO
CONTROL INFORMATION
DATA BROADCAST CONTENT

FIG. 2

| 41 | BROADCAST UNIT |
|---|---|
| 45 | TRANSMISSION BLOCK |
| 44 | TRIGGER INFORMATION GENERATION BLOCK |
| 43 | VALIDITY PROBABILITY COMPUTATION BLOCK |
| 42 | ACCESS COUNT MEASUREMENT BLOCK |
| 46 | SERVER |
| 60 | RECEPTION APPARATUS |

FIG. 3

FROM ANTENNA TERMINAL

| 61 | TUNER |
|---|---|
| 62 | DEMULTIPLEXING BLOCK |
| 63 | AUDIO DECODER |
| 65 | VIDEO DECODER |
| 72 | COMMUNICATION INTERFACE |
| 73 | CACHE MEMORY |

| 71 | RECORDING BLOCK |
|---|---|
| 66 | TRIGGER DETECTION BLOCK |
| 68 | CONTROL BLOCK |
| 74 | APPLICATION ENGINE |
| 64 | AUDIO OUTPUT BLOCK |
| | AUDIO SIGNAL |
| 67 | VIDEO OUTPUT BLOCK |
| | VIDEO SIGNAL |
| 69 | MEMORY |
| 70 | OPERATION BLOCK |

(continued)

| 75A | WORK MEMORY |
| 75B | SAVE MEMORY |

FIG. 4

TRIGGER INFORMATION

FIG. 6

TWO-DIMENSIONAL BARCODE

FIG. 13

TRIGGER INFORMATION OF EXECUTE COMMAND
7 O'CLOCK NEWS
STOCKS
ECONOMIC INFORMATION
STOCK QUOTATION DISPLAY
TRIGGER INFORMATION OF INJECT EVENT COMMAND
GAME RESULT INFORMATION DISPLAY
SPORTS INFORMATION
PRIZE PARTICIPATION
TRIGGER INFORMATION OF TERMINATE COMMAND
END OF 7 O'CLOCK NEWS

FIG. 14

|  | START TRIGGER HANDLING PROCESS |
| S1 | IS TRIGGER RECEIVED? |
| S2 | IS THIS TRIGGER ALREADY RECEIVED (HANDLED)? |
| S3 | IS THIS PROCESS VALID? |
| S4 | IDENTIFY COMMAND |
| S5 | IS COMMAND "PRE_CACHE"? |
| S6 | ACQUIRE DESIGNATED APPLICATION |
| S7 | IS COMMAND "EXECUTE"? |
| S8 | IS DESIGNATED APPLICATION SUSPENDED? |
| S9 | ACQUIRE DESIGNATED APPLICATION IF YET TO BE ACQUIRED |
| S10 | TERMINATE CURRENTLY EXECUTING APPLICATION IF ANY |
| S11 | LAUNCH DESIGNATED APPLICATION |
| S12 | RESUME DESIGNATED APPLICATION AS PER SAVED DATA |
| S13 | IS COMMAND "INJECT_EVENT"? |
| S14 | FIRE CORRESPONDING EVENT |
| S15 | IS COMMAND "SUSPEND"? |
| S16 | SUSPEND CURRENTLY EXECUTING APPLICATION AND SAVE DATA |
| S17 | TERMINATE DESIGNATED APPLICATION IF CURRENTLY EXECUTING |
| S18 | DELETE DATA REGARDING DESIGNATED APPLICATION |

FIG. 16

WHERE ACCESS DISPERSION IS NOT CONSIDERED

TRIGGER INFORMATION HAVING THE SAME TRIGGER ID
DISPERSION PARAMETER VALUE (NOT SET HERE)
TRIGGER VALIDITY PROBABILITY
ACCESS BANDWIDTH OCCUPIED

FIG. 18

(LEFT UNCHANGED IF SUSPENDED)

FIG. 19

PROGRAM A
ACTUAL NO. OF AUDIENCE TERMINALS
ESTIMATED NO. OF AUDIENCE TERMINALS (Ne)
ACTUAL NO. OF BOUTS OF ACCESS UNDER POLICY A
ACCESS COUNT MAXIMUM TARGET VALUE (At)
ACCESS START POINT (T0)
ACCESS LIMIT (Te)

FIG. 20

ESTIMATED NO. OF ADDITIONAL AUDIENCE TERMINALS

FIG. 21

WHEN SERVER IS ACCESSED BY VIEWERS' OPERATIONS
VOTING ACCESS
ACTUAL VOTING COUNT
BUTTON DISPLAY
PERIOD OF VIEWERS' OPERATIONS

FIG. 22

ACTUAL NO. OF BOUTS OF ACCESS TO SERVER
ACCESS TARGET COUNT (Nep)

FIG. 23

ACCESS COUNT MEASURED
NO. OF AUDIENCE TERMINALS YET TO ACCESS
ACTUAL MEASURED VALUES OF SERVER ACCESS COUNT

FIG. 24

| 104 | BUS |
| 105 | INPUT/OUTPUT INTERFACE |
| 106 | INPUT BLOCK |
| 107 | OUTPUT BLOCK |
| 108 | RECORDING BLOCK |
| 109 | COMMUNICATION BLOCK |

(continued)

| 110 | DRIVE |
| 111 | REMOVABLE MEDIA |

**Claims**

1. A transmission apparatus for transmitting AV content, comprising:

   acquisition means for acquiring an estimated audience terminal count indicative of an estimated number of currently receiving reception apparatuses;
   computation means for computing, based on the estimated audience terminal count, a validity probability of trigger information about control of an application program to be executed by a reception apparatus in linkage with the AV content;
   generation means for generating the trigger information including the computed validity probability; and
   transmission means for transmitting the generated trigger information along with the AV content.

2. The transmission apparatus according to claim 1, wherein, for the reception apparatus, the generation means generates the trigger information, including the computed validity probability, for controlling at least one of a process of acquiring the application program, a process of launching the application program, a process of firing an event on the currently executing application program, a process of suspending the currently executing application program, and a process of terminating the currently executing application program.

3. The transmission apparatus according to claim 2, wherein, for the reception apparatus, the generation means generates the trigger information, including the computed validity probability, for controlling the process of acquiring the application program entailing a process of accessing a predetermined server, or the process of firing an event on the currently executing application program.

4. The transmission apparatus according to any one of claims 1 to 3, wherein the acquisition means acquires the estimated audience terminal count based on past audience rating statistics.

5. The transmission apparatus according to claim 3, wherein the acquisition means acquires the estimated audience terminal count based on actual measured values of the number of access to the server.

6. A transmission method for use with a transmission apparatus for transmitting AV content, the transmission method executed by the transmission apparatus and comprising the steps of:

   acquiring an estimated audience terminal count indicative of an estimated number of currently receiving reception apparatuses;
   computing, based on the estimated audience terminal count, a validity probability of trigger information about control of an application program to be executed by a reception apparatus in linkage with the AV content;
   generating the trigger information including the computed validity probability; and
   transmitting the generated trigger information along with the AV content.

7. A program for controlling a transmission apparatus for transmitting AV content, the program causing a computer of the transmission apparatus to execute a process comprising the steps of:

   acquiring an estimated audience terminal count indicative of an estimated number of currently receiving reception apparatuses;
   computing, based on the estimated audience terminal count, a validity probability of trigger information about control of an application program to be executed by a reception apparatus in linkage with the AV content;
   generating the trigger information including the computed validity probability; and
   transmitting the generated trigger information along with the AV content.

8. A reception apparatus for receiving transmitted AV content, the reception apparatus comprising:

   extraction means for extracting trigger information which is transmitted along with the AV content and which concerns control of an application program to be executed in linkage with the AV content;
determination means for determining whether or not the trigger information is valid in accordance with a validity probability included in the extracted trigger information; and
control means for controlling a process related to the application program in accordance with a command indicated by the extracted trigger information only if the trigger information is determined to be valid.

9. The reception apparatus according to claim 8, wherein, only if the trigger information is determined to be valid, does the control means control a process of acquiring the application program, a process of launching the application program, a process of firing an event on the currently executing application program, a process of suspending the currently executing application program, or a process of terminating the currently executing application program, in accordance with the command indicated by the extracted trigger information.

10. The reception apparatus according to claim 9, wherein, only if the trigger information is determined to be valid, does the control means control the process of acquiring the application program entailing a process of accessing a predetermined server, or the process of firing an event on the currently executing application program, in accordance with the command indicated by the extracted trigger information.

11. A reception method for use with a reception apparatus for receiving transmitted AV content, the reception apparatus executed by the reception apparatus and comprising the steps of:

extracting trigger information which is transmitted along with the AV content and which concerns control of an application program to be executed in linkage with the AV content;
determining whether or not the trigger information is valid in accordance with a validity probability included in the extracted trigger information; and
controlling a process related to the application program in accordance with a command indicated by the extracted trigger information only if the trigger information is determined to be valid.

12. A program for controlling a reception apparatus for receiving transmitted AV content, the program causing a computer of the reception apparatus to execute a process comprising the steps of:

extracting trigger information which is transmitted along with the AV content and which concerns control of an application program to be executed in linkage with the AV content;
determining whether or not the trigger information is valid in accordance with a validity probability included in the extracted trigger information; and
controlling a process related to the application program in accordance with a command indicated by the extracted trigger information only if the trigger information is determined to be valid.

13. A broadcasting system comprising:

a transmission apparatus for transmitting AV content; and
a reception apparatus for receiving the transmitted AV content,
wherein the transmission apparatus includes
acquisition means for acquiring an estimated audience terminal count indicative of an estimated number of currently receiving reception apparatuses,
computation means for computing, based on the estimated audience terminal count, a validity probability of trigger information about control of an application program to be executed by the reception apparatus in linkage with the AV content,
generation means for generating the trigger information including the computed validity probability, and
transmission means for transmitting the generated trigger information along with the AV content, and
the reception apparatus includes
extraction means for extracting the trigger information transmitted along with the AV content,
determination means for determining whether or not the trigger information is valid in accordance with the validity probability included in the extracted trigger information, and
control means for controlling a process related to the application program in accordance with a command indicated by the extracted trigger information only if the trigger information is determined to be valid.

# F I G . 1

VIDEO

AUDIO

CONTROL INFORMATION

BROADCAST BAND

A

VIDEO

AUDIO

DATA BROADCAST CONTENT

CONTROL INFORMATION

BROADCAST BAND

B

# F I G . 2

41 BROADCAST UNIT

| TRANSMISSION BLOCK | 45 |
| TRIGGER INFORMATION GENERATION BLOCK | 44 |
| VALIDITY PROBABILITY COMPUTATION BLOCK | 43 |
| ACCESS COUNT MEASUREMENT BLOCK | 42 |

SERVER

46

INTERNET

50

60

RECEPTION APPARATUS

30

EP 2 613 524 A1

# F I G . 4

TS

TRIGGER INFORMATION

TRIGGER INFORMATION

TRIGGER INFORMATION

TRIGGER INFORMATION

# F I G . 5

TS Adaptation Field

Adaptation_field_length

TriggerInfo_descriptor

adaptation_field

PCR | transport_private_data_byte

Various flags

discontinuitty_indicator
random_access_indicator
elementary_stream_priority_indicator
PCR_flag=1
OPCR_flag=0
splicing_point_flag=0
transport_private_data_flag=1
adaptation_field_extension_flag=0

transport_private_data_length

Stuffing byte

transport_packet | TS header | TS payload

EP 2 613 524 A1

# FIG.6

TWO-DIMENSIONAL
BARCODE
→TRIGGER INFORMATION

A

B

EP 2 613 524 A1

# FIG.7

Trigger with "Pre−cache" Command

| Item | No of Bits | explanation |
|---|---|---|
| Trigger_id | 8 | Idntify Trigger with same function. |
| Protocol_verion | 8 | Set to 0 currently |
| Command_code | 8 | In this case, it indicates "pre−cache" command. |
| Trigger_validity | 8 | The reciprocal of this integer value shows probability this trigger shall be treated as valid. |
| App_id | 24 | Application identifier this command target |
| App_type | 4 | Application type (for example HTML5) |
| App_url | 32 | Location of application content if the application content exists on a server |
| Broadcast_App_flag | 1 | Set when Application content exists on broadcast stream |
| Downloaded_App_flag | 1 | Set when Application content can exist on the local storage (NRT service sent it) |
| Internet_App_flag | 1 | Set when Application content exists on a server |

# FIG.8

Trigger with "Execute" Command

| Item | No of Bits | explanation |
|---|---|---|
| Trigger_id | 8 | Idntify Trigger with same function. |
| Protocol_verion | 8 | Set to 0 currently |
| Command_code | 8 | In this case, it indicates "execute" command. |
| Trigger_validity | 8 | The reciprocal of this integer value shows probability this trigger shall be treated as valid. |
| App_id | 24 | Application identifier this command target |
| App_type | 4 | Application type (for example HTML5) |
| App_url | 32 | Location of application content if the application content exists on a server |
| Broadcast_App_flag | 1 | Set when Application content exists on broadcast stream |
| Downloaded_App_flag | 1 | Set when Application content can exist on the local storage (NRT service sent it) |
| Internet_App_flag | 1 | Set when Application content exists on a server |
| App_life_scope | 2 | 0: ES bound          1: service bound<br>2: Provider bound      3: Un-bound |
| App_expire_date | 32 | Passing over it, Application shall be terminated if Terminated Command is not issued. |

EP 2 613 524 A1

# FIG.9

Trigger with "Inject_event" command

| Item | No of Bits | explanation |
|---|---|---|
| Trigger_id | 8 | Idntify Trigger with same function. |
| Protocol_verion | 8 | Set to 0 currently |
| Command_code | 8 | In this case, it indicates "inject event" command. |
| Trigger_validity | 8 | The reciprocal of this integer value shows probability this trigger shall be treated as valid. |
| App_id | 24 | Application identifier this command target |
| App_type | 4 | Application type (for example HTML5) |
| Event_id | 8 | The corresponding event which described in script of the targeted Application shall be fired immediately. |
| Event Embedded Data | N | It is free format data injected into Application along with event. |

# FIG.10

Trigger with "Suspend" Command

| Item | No of Bits | explanation |
|---|---|---|
| Trigger_id | 8 | Idntify Trigger with same function. |
| Protocol_verion | 8 | Set to 0 currently |
| Command_code | 8 | In this case, it indicates "Suspend" command. |
| Trigger_validity | 8 | The reciprocal of this integer value shows probability this trigger shall be treated as valid. |
| App_id | 24 | Application identifier this command target |
| App_type | 4 | Application type (for example HTML5) |

EP 2 613 524 A1

# FIG.11

Trigger with "Terminate" Command

| Item | No of Bits | explanation |
|---|---|---|
| Trigger_id | 8 | Idntify Trigger with same function. |
| Protocol_verion | 8 | Set to 0 currently |
| Command_code | 8 | In this case, it indicates "Terminate" command. |
| Trigger_validity | 8 | The reciprocal of this integer value shows probability this trigger shall be treated as valid. |
| App_id | 13 | Application identifier this command target |
| App_type | 4 | Application type (for example HTML5) |

EP 2 613 524 A1

# FIG.12

| Syntax | No.Bits | Format |
|---|---|---|
| Trigger_Info_data() { | | |
|    trigger_id | 8 | uimsbf |
|    protocol_version | 8 | uimsbf |
|    command_code | 8 | uimsbf |
|    trigger_validity | 8 | uimsbf |
|    App_id | 24 | uimsbf |
|    App_type | 4 | uimsbf |
|    App_url | 32 | |
|    if(command_code==1) { | | (pre-cache) |
|       broadcast_App_flag | 1 | uimsbf |
|       downloaded_App_flag | 1 | uimsbf |
|       internet_App_flag | 1 | uimsbf |
|       reserved | 1 | "1" |
|    } | | |
|    if(coomand_code==2) { | | (execute) |
|       broadcast_App_flag | 1 | uimsbf |
|       downloaded_App_flag | 1 | uimsbf |
|       internet_App_flag | 1 | uimsbf |
|       App_life_scope | 2 | uimsbf |
|       App_expire_date | 32 | bslbf |
|    } | | |
|    if(command_code==3) { | | (inject event) |
|       reserved | 4 | "1111" |
|       event_id | 16 | uimsbf |
|       event_embedded_data_length | 8 | uimsbf |
|       for(i=0;i<N;i++) { | | |
|          event_embedded_data_byte | 8×N | bslbsf |
|       } | | |
|    } | | |
|    if(coomand_code==4 \|\| coomand_code==5) { | | (suspend/ |
|       reserved | 4 | terminate) |
|    } | | "1111" |
| } | | |

# FIG.13

EP 2 613 524 A1

TRIGGER INFORMATION
OF EXECUTE COMMAND

TRIGGER INFORMATION OF
INJECT EVENT COMMAND

7 O'CLOCK NEWS

A

STOCKS

ECONOMIC INFORMATION

B

STOCK
QUOTATION DISPLAY

ECONOMIC INFORMATION

C

GAME RESULT
INFORMATION DISPLAY

SPORT INFORMATION

D

TRIGGER INFORMATION
OF EXECUTE COMMAND

TRIGGER INFORMATION
OF EXECUTE COMMAND

TRIGGER INFORMATION OF
TERMINATE COMMAND

PRIZE
PARTICIPATION

CM

E

GAME RESULT
INFORMATION DISPLAY

SPORT INFORMATION

F

END OF 7 O'CLOCK NEWS

G

# FIG.14

START TRIGGER HANDLING PROCESS

IS TRIGGER RECEIVED? —S1— NO → (A)

↓YES

IS THIS TRIGGER ALREADY RECEIVED (HANDLED)? —S2— YES

↓NO

IS THIS PROCESS VALID? —S3— NO

↓YES

IDENTIFY COMMAND — S4

YES ← IS COMMAND "PRE_CACHE"? —S5

NO

ACQUIRE DESIGNATED APPLICATION — S6

→ (A)

IS COMMAND "EXECUTE"? —S7— YES

↓NO

YES ← IS COMMAND "INJECT_EVENT"? — S13

↓NO

FIRE CORRESPONDING EVENT — S14

→ (A)

IS COMMAND "SUSPEND"? — S15 — YES

↓NO

SUSPEND CURRENTLY EXECUTING APPLICATION AND SAVE DATA — S16

TERMINATE DESIGNATED APPLICATION IF CURRENTLY EXECUTING — S17

DELETE DATA REGARDING DESIGNATED APPLICATION — S18

IS DESIGNATED APPLICATION SUSPENDED? — S8 — NO

↓YES

ACQUIRE DESIGNATED APPLICATION IF YET TO BE ACQUIRED — S9

TERMINATE CURRENTLY EXECUTING APPLICATION IF ANY — S10

LAUNCH DESIGNATED APPLICATION — S11

RESUME DESIGNATED APPLICATION AS PER SAVED DATA — S12

(A)   (A)   (A)   (A)

# FIG.15

# FIG.16

**A**
WHERE ACCESS DISPERSION
IS NOT CONSIDERED

TRIGGER INFORMATION HAVING
SAME TRIGGER ID

TS

1 1 1 1

DISPERSION
PARAMETER VALUE
(NOT SET HERE)

TRIGGER
VALIDITY       1   1   1   1
PROBABILITY

ACCESS
BANDWIDTH
OCCUPIED

SERVER

**B**
WHERE ACCESS DISPERSION
IS NOT CONSIDERED

TRIGGER INFORMATION HAVING
SAME TRIGGER ID

TS

4 3 2 1

DISPERSION
PARAMETER VALUE

TRIGGER
VALIDITY       1/4  1/3  1/2  1
PROBABILITY

ACCESS
BANDWIDTH
OCCUPIED

SERVER

EP 2 613 524 A1

# FIG.17

@Broadcast Stream

Trigger Command | APP Pre-Cache | APP Execute | APP Event | APP Suspend | APP Execute | APP Terminate

@Browser
broadcast

Internet

NRT

Get& Pre-cache APP → APP ready

Launch APP → APP active

Metadata injection → APP active

Fire Event On APP → Event

Suspend APP → APP Suspended

Resume APP → APP active

Stop application → ✕

User Interaction

@Display

APP icon

APP graphics/text

EP 2 613 524 A1

# FIG.18

EP 2 613 524 A1

Trigger:Execute

Stopped
(Absence)

Trigger:Pre-cache

Ready

Trigger:Execute

Active

Trigger
:Execute

Suspended

Trigger:Suspend

· Trigger: Terminate
· Expire date
· Transit to another application.
· Another Application activated (LEFT UNCHANGED IF SUSPENDED)

# FIG.19

PROGRAM A

ACTUAL
AUDIENCE TERMINAL COUNT

ESTIMATED
AUDIENCE
TERMINAL COUNT Ne

ACTUAL
ACCESS COUNT UNDER Policy A

ACTUAL
ACCESS COUNT UNDER Policy B

ACCESS COUNT
MAXIMUM TARGET
VALUE At

ACCESS START POINT T0

ACCESS LIMIT Te

Td

$Ntr=(Te-T0)/td$

EP 2 613 524 A1

# FIG.20

PROGRAM A

PROGRAM B

ACTUAL
AUDIENCE TERMINAL COUNT

ESTIMATED
AUDIENCE
TERMINAL COUNT Neb

ESTIMATED
AUDIENCE
TERMINAL COUNT Nea

ESTIMATED
ADDITIONAL AUDIENCE
TERMINAL COUNT Ned

ACCESS COUNT
MAXIMUM TARGET
VALUE At

Ta0

Tae/Tb0

ACCESS LIMIT Tbe

Td    pre-cache
command

execute
command

EP 2 613 524 A1

# FIG.21

PROGRAM A

AUDIENCE TERMINAL COUNT

WHEN SERVER
IS ACCESSED
BY VIEWERS'
OPERATIONS

Voting ACCESS
------- ESTIMATED
AUDIENCE
TERMINAL COUNT Nev

ACTUAL Voting COUNT

ACCESS COUNT
MAXIMUM TARGET
VALUE At

ACCESS START POINT T0

ACCESS LIMIT Te

td

BUTTON DISPLAY
PERIOD OF VIEWERS'
OPERATIONS

Inject
Event

$Ntr=(Te-T0)/td$

EP 2 613 524 A1

# FIG.22

PROGRAM A

ACTUAL
AUDIENCE TERMINAL COUNT

ESTIMATED
AUDIENCE
TERMINAL COUNT Nea

ACCESS TARGET
COUNT Nep

ACTUAL
ACCESS COUNT TO SERVER

ACCESS COUNT
MAXIMUM TARGET
VALUE At

ACCESS START POINT T0

ACCESS LIMIT Te

Td

$Ntr=(Te-T0)/td$

EP 2 613 524 A1

FIG.23

PROGRAM A  PROGRAM A

ACCESS COUNT MAXIMUM TARGET VALUE At

ACTUAL AUDIENCE TERMINAL COUNT

NO. OF AUDIENCE TERMINALS YET TO ACCESS

ACTUAL MEASURED VALUES OF SERVER ACCESS COUNT

ACCESS COUNT MEASURED

Trigger Validity

Trigger timing

P1  P2  P3  Pn

# FIG.24

EP 2 613 524 A1

| INTERNATIONAL SEARCH REPORT | International application No. |
|---|---|
| | PCT/JP2011/068833 |

A. CLASSIFICATION OF SUBJECT MATTER
*H04N7/173*(2011.01)i

According to International Patent Classification (IPC) or to both national classification and IPC

B. FIELDS SEARCHED

Minimum documentation searched (classification system followed by classification symbols)
H04N7/173

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-155141 A (Nippon Telegraph and Telephone Corp.), 08 June 1999 (08.06.1999), paragraphs [0002] to [0006], [0009]; fig. 1 & US 6047052 A | 1-13 |
| A | JP 2007-521769 A (OpenTV, Inc.), 02 August 2007 (02.08.2007), paragraphs [0002] to [0011]; fig. 4 & US 2005/0138667 A1 & EP 1698059 A & WO 2005/062773 A2 | 1-13 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 August, 2011 (31.08.11) | 13 September, 2011 (13.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/068833

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-529373 A (Nagra France S.A.S.), 31 July 2008 (31.07.2008), entire text; all drawings & US 2008/0133728 A1 & US 7783776 B2 & EP 1686807 A1 & EP 1842375 A & WO 2006/079640 A1 | 1-13 |
| A | JP 2005-012545 A (Dainippon Printing Co., Ltd.), 13 January 2005 (13.01.2005), entire text; all drawings (Family: none) | 1-13 |
| A | JP 2006-109218 A (KDDI Corp.), 20 April 2006 (20.04.2006), entire text; all drawings (Family: none) | 1-13 |

Form PCT/ISA/210 (continuation of second sheet) (July 2009)

**EP 2 613 524 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006050237 A